(19) Europäisches Patentamt / European Patent Office / Office européen des brevets

(11) **EP 3 945 530 B1**

(12) **FASCICULE DE BREVET EUROPEEN**

(45) Date de publication et mention
de la délivrance du brevet:
**23.08.2023 Bulletin 2023/34**

(21) Numéro de dépôt: **21187526.5**

(22) Date de dépôt: **23.07.2021**

(51) Classification Internationale des Brevets (IPC):
**G21C 9/00** *(2006.01)*   **G21C 15/18** *(2006.01)*

(52) Classification Coopérative des Brevets (CPC):
**G21C 9/00; G21C 15/18;** Y02E 30/00; Y02E 30/30

(54) **RÉACTEUR ET PROCÉDÉ DE SÉCURITÉ POUR RÉACTEUR EN CAS DE FUSION DU COEUR**

REAKTOR UND SICHERHEITSVERFAHREN FÜR REAKTOR IM FALLE EINER KERNSCHMELZE

REACTOR AND SAFETY METHOD FOR REACTOR IN THE EVENT OF CORE MELTDOWN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.07.2020 FR 2008046**

(43) Date de publication de la demande:
**02.02.2022 Bulletin 2022/05**

(73) Titulaire: **Commissariat à l'Energie Atomique et
aux Energies
Alternatives
75015 Paris (FR)**

(72) Inventeurs:
 • **MORIN, Franck
   13100 AIX EN PROVENCE (FR)**
 • **AVAKIAN, Gilles
   13012 MARSEILLE (FR)**

(74) Mandataire: **Hautier IP
   20, rue de la Liberté
   06000 Nice (FR)**

(56) Documents cités:
**EP-A1- 0 907 187   CN-B- 104 167 229**

**Description**

## DOMAINE TECHNIQUE

L'invention concerne le domaine de la sûreté des centrales nucléaire et plus particulièrement la gestion des accidents graves des réacteurs nucléaires à eau pressurisée (REP). Plus spécifiquement encore, la présente invention s'applique à la gestion des accidents impliquant la formation d'un bain de corium en fond de cuve consécutivement à une situation d'entrée en accident grave, dans une stratégie de maintien ou rétention du corium en cuve.

## ÉTAT DE LA TECHNIQUE

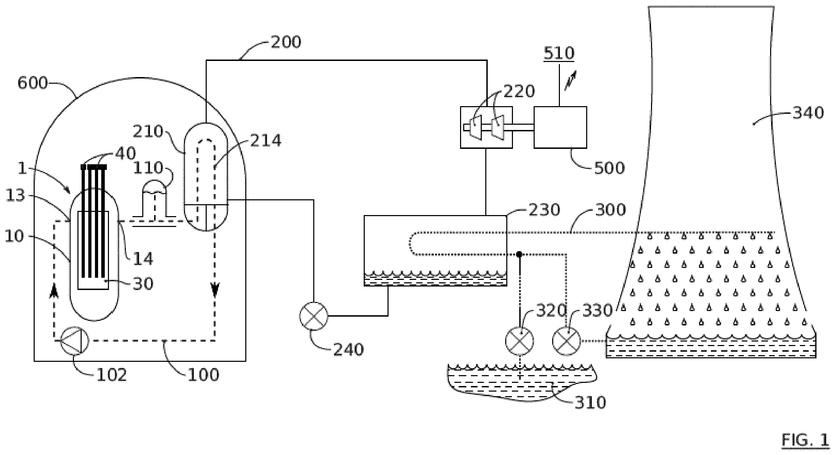

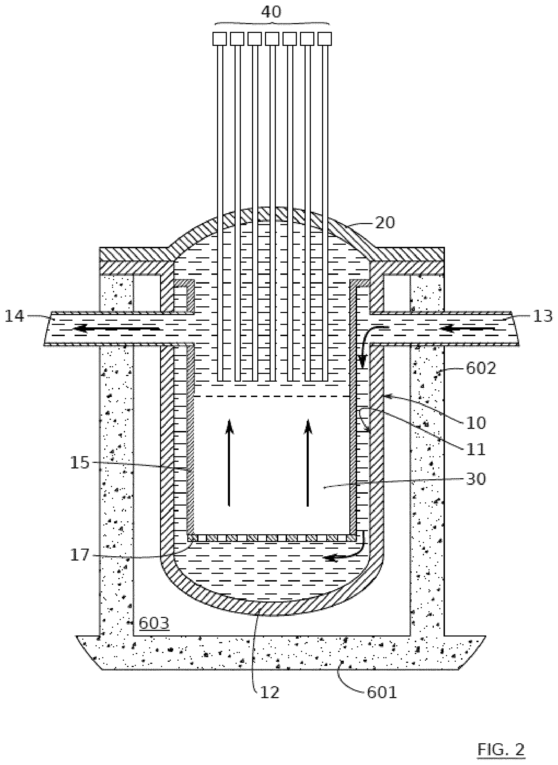

Une centrale nucléaire de type REP est illustrée en figures 1 et 2.

Une telle centrale comprend généralement une enceinte de confinement 600 à l'intérieur duquel est logé le réacteur 1. Le réacteur 1 comprend une cuve 10 formant avec un couvercle 20 une enceinte étanche. Cette enceinte étanche loge les assemblages combustibles du coeur 30. Sur la figure 2, par souci de clarté, le coeur est représenté par une zone en pointillés.

La cuve 10 comprend en outre au moins une entrée 13, dite froide, de fluide connectée à circuit primaire 100 et au moins une sortie 14, dite chaude, également connectée au circuit primaire 100. De l'eau pressurisée circule dans le circuit primaire 100.

En fonctionnement normal du réacteur 1, le circuit primaire 10 assure ainsi le transport de la chaleur du coeur 30 vers un circuit secondaire 200 à l'intérieur duquel circule également de l'eau.

Le circuit secondaire 200 comprend un et de préférences plusieurs générateurs de vapeur 210. L'échange de chaleur entre le circuit primaire 100 et les circuits secondaires 200 s'effectue à l'intérieur des générateurs de vapeur 210. Sur l'exemple illustré en figure 1, une boucle 214 du circuit primaire 100 est illustrée dans le générateur de vapeur 210.

Les schémas simplifiés des figures 1 et 2 illustrent d'autres éléments parfaitement classiques d'un circuit primaire 100 et d'un coeur 30 de réacteur 1 tels que : des barres 40 de commande, une pompe hydraulique 102 en entrée de cuve 10 pour faire circuler l'eau dans le circuit primaire 100, un pressuriseur 110 en sortie de cuve 10, une enceinte de confinement 600, et des structures formant un radier 601 et des parois 602 délimitant un puits 603 de cuve 10.

Toujours en fonctionnement normal du réacteur 1, lors de son passage dans le générateur de vapeur 210, une partie de l'eau du circuit secondaire 200 se vaporise et parvient dans un dispositif de conversion d'énergie telle qu'une turbine 220 entraînée en mouvement par la détente de la vapeur. L'énergie mécanique en sortie des turbines 220 est ensuite transformée en énergie électrique par des alternateurs 500 et des transformateurs 510 en vue de son acheminement vers des lieux de consommation.

Le fluide, en sortie des turbines 220 est condensé dans un condenseur 230 avant d'être réinjecté dans les générateurs de vapeur 210 par une pompe 240.

Afin de condenser la vapeur issue des turbines 220, le condenseur 230 est refroidi par un circuit 300 ouvert, alimenté par une source d'eau 310 telle qu'un fleuve. Ce circuit 300 comprend également des pompes de relevage 320, 330 et une tour de refroidissement 340.

Comme cela apparaît clairement sur le schéma de la figure 1, l'eau du circuit primaire 100 a pour fonction d'extraire les calories générées par le réacteur 1 afin de les transférer au circuit secondaire 200, en vue de leur transformation en électricité à l'aide système de conversion d'énergie qu'est le turbo alternateur. En fonctionnement normal, le coeur 30 est critique, et la puissance thermique produite est évacuée par le circuit primaire 100. Le contrôle de la criticité du coeur est assuré à la fois par la position de barres de contrôle 40 dans le coeur 30, mais aussi par une teneur en bore soluble dans l'eau du circuit primaire.

Différents scenarii accidentels comme un accident de perte de réfrigérant primaire de type grosse brèche, combinés à des facteurs aggravants de non fonctionnement de systèmes de secours classés, sont susceptibles de conduire à une situation d'entrée en accident grave.

Dès lors, il s'ensuit que le coeur 30 entre dans un état de fusion avec génération de corium. Le corium est un ensemble partiel ou total de combustibles fondus et d'internes de cuve 10 à l'état de fusion. Le corium s'écoule par gravité dans le fond 12 de la cuve 10 et y forme un bain. Le corium possède donc tout ou partie de l'inventaire de combustible fondu, contenant l'ensemble des produits de fission solides et la puissance thermique résiduelle associée.

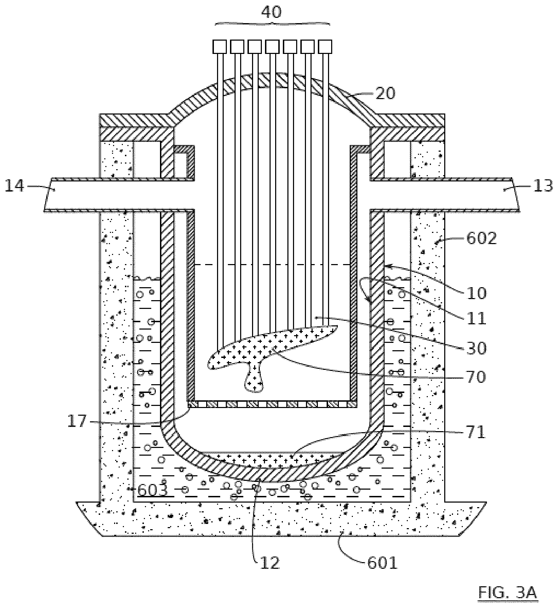

Les figures 3A à 3C illustrent, de manière très schématisée, un accident grave d'une cuve REP avec formation d'un bain de corium puis percement de la cuve.

Sur la figure 3A, on a illustré la désagrégation et la fusion partielle du coeur 30, la formation de corium 70 et l'apparition d'un bain 71 de corium 70 en fond 12 de cuve 10. De manière connue, lors de la formation du bain 71 de corium 70 une couche 72 superficielle de métal liquide apparaît sur la surface libre du bain 71. Une partie de la puissance thermique du bain 71 de corium 70 est transmise à cette couche 72.

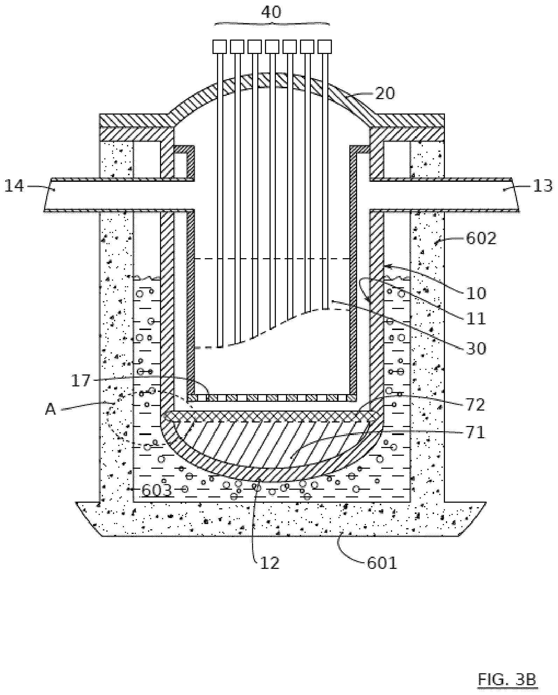

La figure 3B illustre, de manière très schématisée l'apparition de cette couche 72 métallique (dont l'épaisseur est volontairement exagérée par souci de clarté). La zone référencée A illustre le début du percement de la cuve 10 par la couche 72 métallique. Ce percement de la cuve 10 est engendré par un phénomène habituellement qualifié par son vocable anglais de « focusing effect » (effet de focalisation). La couche métallique 72 est très conductrice thermiquement et absorbe une grande partie de l'énergie thermique du bain de corium 71. Le focusing effect correspond à une situation dans laquelle la couche métallique 72 transfert par conduction une partie de sa chaleur sur une faible surface des parois latérales 11 de la cuve 10. Cette focalisation de puissance thermique sur une faible surface peut entrainer le percement des parois 11 de la cuve 10.

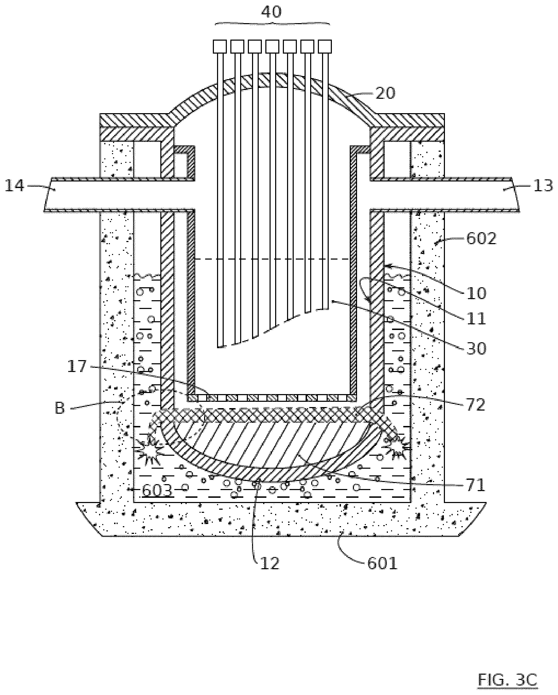

La figure 3C illustre l'achèvement du percement de la cuve 10. Le corium 70 se déverse alors dans le puits 603 de cuve 10. Par ailleurs, lors du contact direct entre le corium et l'eau de refroidissement contenu dans le puits 603 il peut se produire des explosions appelées explosions vapeur (détente brutale de l'eau et dilatation vapeur), et la création d'hydrogène. Ces conséquences sont inacceptables en termes de risque de rupture de la troisième barrière de confinement formée par l'enceinte réacteur 600. Le risque de percement de cuve, en situation de puits 603 de cuve 10 noyé, doit être éliminé. De plus, il est essentiel d'éviter les disséminations incontrôlées du corium 70, matière hautement radioactive et présentant une puissance thermique très élevée. Une dissémination du corium 70 au niveau du radier 601 engendre un risque de percement de ce dernier et une propagation jusqu'à des zones phréatiques potentielles

Deux modes de gestion du corium en cas d'Accident Grave de REP existent suivant les concepteurs de chaudière nucléaire de REP. Une première famille de solutions, désignée Ex Vessel Rétention (signifiant rétention à l'extérieur de la cuve), consiste à laisser le corium 70 percer la cuve 10, en situation de circuit primaire dépressurisé, et s'écouler dans une zone dédiée à l'étalement du corium et à la gestion de son refroidissement. Ce type de solutions présente comme inconvénient de nécessiter une plateforme imposante de réception et d'étalement de corium appelée récupérateur, ce qui alourdit nettement le génie civil et le coût d'infrastructure de l'enceinte réacteur. Un autre inconvénient important concerne la démonstration d'intégrité de la troisième barrière de confinement formée par l'enceinte réacteur, pour éviter la contamination de l'environnement, puisque la barrière de confinement formée par le circuit primaire a été rompue.

Une deuxième famille de solutions, désignée In Vessel Rétention (signifiant rétention à l'intérieur de la cuve) ou par son acronyme IVR, consiste à déployer des systèmes pour maintenir le corium 70 à l'intérieur de la cuve 10 en évitant le percement de cette dernière.

Dans cette famille de solutions, une des stratégies vise à maintenir le corium 70 dans la cuve 10 et à extraire sa puissance résiduelle à travers la paroi de la cuve 10 au moyen d'un refroidissement externe, notamment par la mise en place d'une boucle de convection (naturelle ou forcée), après le noyage du puits 602 de cuve 10.

Ce type de solution est par exemple décrit dans le document WO2009/053322. Dans ce document, une pompe située en fond de cuve permet d'augmenter la convection forcée de l'eau située dans le puits 603 de cuve au contact de la paroi externe de la cuve 10.

Une circulation naturelle de l'eau au contact de la cuve, puis vaporisée et recondensée en partie supérieure de l'enceinte peut également être mise en place. Ce type de solution est proposé comme gestion d'évacuation de la puissance résiduelle en accident grave dans le réacteur AP1000 de la société Westinghouse™. Ce moyen de refroidissement est entièrement passif, contrairement à la solution décrite dans le document WO2009/053322.

Par ailleurs, suivant les hypothèses considérées concernant l'épaisseur de la couche 72 métallique à l'origine du focusing effect, il demeure une probabilité réelle de ne pas atteindre des performances de refroidissement suffisantes pour éviter le percement de la cuve. C'est pourquoi généralement, même dans le cadre d'une gestion IVR de l'accident grave, des dispositifs complémentaires de traitement du risque hydrogène, et une étude de limitation des conséquences de l'explosion vapeur est décrite, avec des moyens additionnels prévus, pour traiter l'hypothèse défavorable de percement de cuve.

Une stratégie IVR, décrite dans le document FR2763168 ou EP0907187 consiste à prévoir, dans le fond de la cuve, un dispositif de récupération du corium. Le corium s'écoule par gravité depuis le coeur jusque dans ce récupérateur. On prévoit par ailleurs une injection d'eau par gravité par un réservoir supplémentaire connecté au puits de cuve.

Cette solution présente pour inconvénient de nécessiter la présence d'un système additionnel formé par le récupérateur, ce qui alourdit et augmente nettement la taille de la cuve réacteur. De plus, les moyens d'injection d'eau en cuve formés par le réservoir directement connecté au circuit primaire ne sont qu'un moyen d'injection de sûreté complémentaire de ceux déjà présents pour le traitement des accidents de dimensionnement. La pression primaire résiduelle existante à l'entrée de l'accident grave nécessite de prévoir une hauteur gravitaire importante de ce réservoir, ce qui alourdit considérablement le génie civil.

Par conséquent, les quelques solutions qui ont été proposées pour gérer le refroidissement du corium, présentent toutes des inconvénients. Il existe un besoin consistant à proposer une solution limitant, voire supprimant au moins certain de ces inconvénients. Tel est un objectif de la présente invention.

Un autre objectif de la présente invention consiste à réduire voire à éliminer le risque de percement de la cuve par focusing effect.

## RÉSUMÉ

Pour atteindre au moins l'un de ces objectifs, la présente invention prévoit un procédé de sécurité pour réacteur nucléaire à eau pressurisée en cas de fusion au moins partielle d'un coeur du réacteur avec formation d'un bain de corium, le réacteur comprenant au moins, lors d'une phase de fonctionnement :

- un circuit primaire dans lequel est destiné à circuler un fluide primaire à base d'eau, le circuit primaire étant configuré pour que le fluide primaire pénètre dans une cuve du réacteur et traverse le coeur contenu dans la cuve afin d'extraire de la chaleur produite par le coeur,
- un circuit secondaire, dans lequel est destiné à circuler un fluide secondaire à base d'eau, le circuit secondaire étant fluidiquement isolé du circuit primaire, et comprenant au moins un générateur de vapeur, le circuit secondaire étant configuré pour absorber de la chaleur du circuit primaire et la transformer en partie au moins en vapeur dans le générateur de vapeur.

Le procédé comprend au moins l'étape suivante en réponse à une détection d'un événement caractéristique d'une fusion au moins partielle du coeur du réacteur avec formation d'un bain de corium dans un fond de la cuve et avec formation d'une couche métallique liquide à la surface du bain de corium:

- rupture par explosion de l'isolation fluidique pour mettre en communication fluidique le circuit secondaire avec le circuit primaire de sorte que le fluide secondaire emprunte le circuit primaire pour s'écouler à l'intérieur de la cuve sur ladite couche métallique liquide du bain de corium.

Ainsi, le fluide secondaire sous pression, typiquement de l'eau à pression et température de saturation, contenue dans le circuit secondaire et en particulier dans le ou les générateurs de vapeur s'écoule dans le fond de la cuve sur la couche métallique.

Cette injection de réfrigérant s'effectue donc de manière passive puisque l'eau du circuit secondaire est à une pression supérieure de celle du circuit primaire.

Typiquement, la pression de l'eau contenue dans un générateur de vapeur est de l'ordre de 60 à 70 bars, alors que celle du circuit primaire est typiquement inférieure à 20 bars en entrée de situation d'Accident Grave.

En un temps court, l'eau du circuit secondaire commence à entrer au contact de la couche de métal liquide en surfusion entraînant une réduction drastique du flux thermique à l'origine du percement par focusing effect. Tout ou partie de l'eau provenant du circuit secondaire se vaporise au contact de la couche de métal liquide et du bain de corium, par ruissellement le long de la cuve réacteur côté branche froide, avantageusement le long d'un volume habituellement qualifié de downcomer,

L'eau provenant du circuit secondaire s'écoule pendant une durée suffisamment longue pour refroidir la couche de métal liquide au moins pendant toute la durée au cours de laquelle cette couche de métal liquide présente une épaisseur suffisamment faible pour générer un risque de percement de la cuve. On peut ainsi qualifier cet écoulement de contrôlé. En revanche, le débit du flux s'écoulant sur la couche métallique liquide n'a pas besoin d'être très important.

Une façon de gérer ce débit et cette durée d'injection de l'eau du circuit secondaire dans la cuve est de calibrer précisément la section de la ou des brèches ouvertes entre le circuit secondaire et le circuit primaire.

À titre d'exemple non limitatif, le débit d'eau secondaire entrant dans la cuve est celui correspondant à une brèche d'environ 20mm de diamètre et plus généralement entre 10 et 30 mm.

L'intégralité de l'eau contenue dans un ou plusieurs générateurs de vapeur (GV) s'écoule alors progressivement dans la cuve réacteur. La valeur typique de débit liquide entrant dans le circuit primaire depuis le circuit secondaire est d'environ 5 kg/s. À titre d'exemple non limitatif, ce débit est plus généralement compris entre 2 kg/s et 10 kg/s. Cette valeur est drastiquement plus faible que toutes les injections de sûreté destinées à renoyer le coeur. Le procédé selon l'invention permet ainsi à la fois une longue durée de mission de transfert d'eau des GV vers la zone de potentiel percement de la cuve par focusing effect, mais également une forte limitation de la vapeur créée par l'interaction eau/métal liquide, ce qui limite la surpression du circuit primaire.

À titre également d'exemple non limitatif, la durée d'injection de l'eau du circuit secondaire dans la cuve est de l'ordre de trois heures et plus généralement entre 30 min et 5 heures. À titre de comparaison, dans une solution qui consisterait à renoyer le coeur en déversant dans la cuve l'eau du circuit secondaire, la durée d'injection serait d'environ une minute à quelques minutes.

La quantité d'eau par générateur de vapeur disponible suivant les scenarii accidentels varie entre 29 tonnes et 70 tonnes par générateur de vapeur pour un réacteur de puissance 1300 MWe (type Palier N4 du parc français).

Par rapport à l'échelle de temps d'un accident grave et plus particulièrement par rapport à l'échelle de temps de la fusion du coeur et de la formation de corium, le temps pendant lequel l'eau du circuit secondaire s'écoule sur le bain de corium est court en mettant en oeuvre le procédé selon l'invention.

Néanmoins, dans le cadre du développement de la présente invention, il a été observé que cette durée est suffisante pour réduire très significativement, voire pour éliminer le risque de percement de la cuve par focusing effect.

En effet, il a été remarqué que la période de temps au cours de laquelle le focusing effect peut entraîner le percement de la cuve est relativement limitée. Il a été observé que le risque de percement dû au focusing effect correspond à une plage de temps où le bain de corium possède une couche métallique liquide en surface d'une épaisseur relativement fine, typiquement de quelques centimètres. Dans cette configuration, une partie importante de la puissance thermique issue du bain corium est transmise à cette couverture métallique fine, puissance qui est alors transmise par contact à la paroi interne de la cuve, et induit le percement progressif de cette dernière.

Au cours du temps, le bain de corium continue à être alimenté par les éléments internes à la cuve qui fondent progressivement, et la couche de métal liquide en surface s'épaissit, du fait de l'inventaire de métal fondu qui augmente. La surface de contact entre la couche de métal liquide et la paroi interne de la cuve augmente. La puissance thermique transmise à cette couche se répartit alors dans une épaisseur plus grande de la couche métallique liquide, et la puissance de percement de cuve est alors moins focalisée. Le risque de percement de cuve devient alors plus faible.

Une fois que tout l'inventaire de métal interne est fondu, l'épaisseur de la couche métallique de surface est alors telle que la puissance thermique en périphérie et au contact avec la cuve n'est plus suffisante pour percer la cuve. Généralement, à ce stade, le refroidissement externe de la cuve est suffisamment performant pour évacuer la puissance thermique issue du bain. Le percement de cuve est alors définitivement stoppé.

Pour exemple, si 3 MWth sont transmis à une couche métallique de 10 cm d'épaisseur et de 12 m de périphérie, sans possibilité d'évacuation thermique par la surface supérieure, il y aura alors un flux thermique appliqué à la cuve de 3/1.2 = 2.5 MW/m$^2$. Un tel flux n'est pas évacuable par refroidissement externe classique lorsque la cuve est noyée dans un puits de cuve inondé. L'excès de puissance thermique transmis à la cuve se transforme alors en chaleur de fusion de la cuve elle-même et le percement de la cuve se poursuit depuis l'intérieur. Lorsque la couche métallique liquide atteint une épaisseur double ou triple, le flux est alors réduit d'autant, et le refroidissement externe devient alors suffisant pour stopper la progression du percement de la cuve puisque l'ensemble de la puissance thermique issu du bain est évacué jusqu'à l'eau externe, sans provoquer de fusion du métal de cuve.

Lorsque l'eau liquide secondaire arrive au contact de la couche de métal liquide depuis les branches froides du circuit primaire, de préférence à l'endroit du percement de cuve, c'est-à-dire en périphérie du downcomer comme cela sera décrit en détail par la suite, chaque kilogramme d'eau par seconde qui s'évapore induit un refroidissement d'environ 2 à 3 MWth de la couche liquide. Avec un débit d'environ 5 kg/s sur une période d'environ 3 heures, le refroidissement de la couche de métal liquide correspond à une évacuation de puissance thermique d'environ 10 à 15 MWTh pendant trois heures, ce qui réduit drastiquement voire empêche le percement de la cuve.

De plus, à partir d'une certaine hauteur de bain corium, la couche superficielle de métal liquide entre en contact avec la plaque support coeur, illustrée en figures 2 et 3A par la référence 17. La température de métal liquide surchauffé par la puissance thermique du bain de corium se réduit alors drastiquement par la fusion significative de la partie inférieure de la plaque support coeur.

En effet, la température de fusion du métal est largement inférieure à celle susceptible d'être atteinte par la couche de métal liquide provoquant le focusing effect.

Ainsi, dans le cadre du développement de la présente invention, on s'est aperçu que l'on peut lutter efficacement contre le percement de la cuve par focusing effect en injectant une quantité d'eau avec un débit relativement faible à l'intérieur de la cuve. Le volume d'eau contenue dans les générateurs de vapeur est alors suffisant pour refroidir efficacement la couche de métal liquide pendant toute la durée au cours de laquelle la couche de métal liquide présente une épaisseur suffisamment faible pour que le phénomène de Focusing effect conduise au percement de la cuve.

De manière particulièrement avantageuse, l'invention ne nécessite pas de composants supplémentaires dans le réacteur, tel qu'un récupérateur, ou des systèmes additionnels dans le puits de cuve, tels que des moyens de convection forcée.

Par ailleurs, l'invention ne nécessite pas de réservoirs additionnels placés à une hauteur importante. Pour autant, en exploitant la pression du circuit secondaire, l'invention permet une injection d'eau dans la cuve très rapide.

En revanche il est nécessaire de prévoir un refroidissement de la paroi externe de la cuve, dans la configuration de maintien du corium en cuve, et refroidissement par noyage du puits de cuve.

La solution proposée permet donc, fonctionnement passif, c'est-à-dire sans pompe pour déverser sur le bain de corium un réfrigérant, un renforcement de la stratégie de gestion du corium en cuve, en luttant contre les effets du Focusing Effect susceptibles de mettre en échec le non percement de la cuve réacteur.

Par ailleurs, l'invention ne prévoit pas de composants supplémentaires ou de piquage directement sur la cuve du réacteur, ces derniers pouvant entraîner une baisse de la fiabilité de la sûreté du réacteur.

Ainsi, l'invention permet d'augmenter de manière considérable la sécurité d'un réacteur à eau pressurisée en cas de fusion du coeur avec formation d'un bain de corium.

L'invention porte également sur un réacteur à eau pressurisée comprenant au moins :

- une cuve logeant un coeur du réacteur, la cuve comprenant au moins une entrée et au moins une sortie,
- un circuit primaire dont au moins une première extrémité est connectée à l'entrée de la cuve et dont au moins une extrémité est connectée à la sortie de la cuve de sorte à ce qu'un fluide primaire, de préférence à base d'eau, circulant dans le circuit primaire pénètre dans la cuve du réacteur par ladite entrée et en ressorte par ladite sortie en passant à travers le coeur afin d'extraire de la chaleur produite par le coeur,
- un circuit secondaire, fluidiquement isolé du circuit primaire, dans lequel est destiné à circuler un fluide secondaire à base d'eau, et comprenant au moins un générateur de vapeur, le circuit secondaire étant configuré pour absorber de la chaleur du circuit primaire et la transformer en partie au moins en vapeur dans le générateur de vapeur.

Le réacteur comprend un système de sécurité comprend un dispositif de sécurité comprenant au moins un dispositif explosif configuré pour exploser afin de rompre l'isolation fluidique entre le circuit secondaire et le circuit primaire de sorte à créer au moins un, et de préférence un unique passage permettant un écoulement à l'intérieur du circuit primaire du fluide secondaire présent dans l'au moins un générateur de vapeur.

Avantageusement, le dispositif explosif est configuré pour exploser en cas de fusion au moins partielle du coeur avec formation d'un bain de corium dans un fond de la cuve et avec formation d'une couche métallique liquide à la surface du bain de corium.

Ainsi, l'exposition du dispositif explosif permet que le fluide secondaire contenu dans l'au moins un générateur de vapeur puisse s'écouler dans la cuve en passant au préalable par le circuit primaire.

Plus précisément, lorsque le bain de corium se forme et que la couche métallique liquide apparaît à la surface du bain, le fluide secondaire sous pression contenu dans le générateur de vapeur se déverse dans le circuit primaire, avantageusement dans la ou les branches froides, puis dans la cuve. Ce fluide refroidit la couche métallique liquide, ce qui atténue le phénomène de focusing effect. On évite ainsi le percement de la cuve.

$S_{brèche}$ est la section minimale dudit passage qui permet l'injection, à l'intérieur du circuit primaire, du fluide secondaire présent dans l'au moins un générateur de vapeur.

Selon un exemple non limitatif $S_{brèche}$ est inférieure à 20cm$^2$ (10$^{-2}$ mètres).

Selon un exemple $S_{brèche}$ est supérieure à 2 cm$^2$, et de préférence $S_{brèche}$ est supérieure à 3 cm$^2$ Selon un exemple $S_{brèche}$ est compris entre 2 cm$^2$ et 20cm$^2$.

Selon un exemple, $S_{brèche}$ est comprise entre 0.2 cm$^2$ et 20 cm$^2$, de préférence 0.8cm$^2$ et 20 cm$^2$ et encore plus préférentiellement entre 2 cm$^2$ et 7 cm$^2$.

La section d'entrée côté branche froide de la cuve réacteur est très largement supérieure à la section de la brèche provoquée entre le circuit secondaire et le circuit primaire.

Typiquement, selon un exemple non limitatif : $S_{brèche} < 0.05 * S_{entrée}$, de préférence $S_{brèche} < 0.01 * S_{entrée}$, de préférence $S_{brèche} < 0.005 * S_{entrée}$ et de préférence $S_{brèche} < 0.001 * S_{entrée}$. $S_{entrée}$ est la section minimale du passage du fluide primaire dans le circuit primaire et jusque dans la cuve.

Si le circuit primaire comporte plusieurs entrées dans la cuve, ce qui est le cas lorsqu'il y a plusieurs générateurs de vapeur, alors la section $S_{entrée}$ est la somme des sections des entrées du circuit primaire jusque dans la cuve.

Typiquement, la section de passage du fluide primaire côté branche froide est de l'ordre de 6000 cm$^2$.

Typiquement lorsque $S_{entrée}$ présente une section circulaire, $S_{entrée}$ présente un diamètre compris entre 800 et 900mm (10$^{-3}$ mètres).

Ainsi, la section par laquelle le fluide secondaire s'écoule dans le circuit primaire est très inférieure à la section par laquelle le fluide primaire s'écoule habituellement dans la cuve. Ce rapport des sections $S_{brèche}$ et $S_{entrée}$ permet d'injecter dans le primaire et donc dans la cuve un débit de fluide secondaire pendant une période de temps relativement longue. Plus précisément pendant une période de temps suffisante pour couvrir la durée pendant laquelle l'épaisseur de la couche métallique liquide est suffisamment faible pour percer la paroi de la cuve par focusing effect.

Ces caractéristiques permettent de réduire, voire de supprimer le risque de percement de la cuve par focusing effect.

## BRÈVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :

La figure 1 schématise une centrale nucléaire de type REP.
La figure 2 illustre, de manière schématique, une coupe verticale d'une cuve de réacteur de type REP dans son puits de cuve dans un état de fonctionnement hors accident grave.
Les figures 3A à 3C illustrent, de manière schématique, différentes phases d'un accident grave entraînant la fusion partielle ou totale du coeur, la formation d'un bain de corium puis le percement de la cuve dans le réacteur illustré en figure 2 par focusing effect.
La figure 4 illustre, de manière schématique, la mise en oeuvre de l'invention avec le refroidissement du bain de corium par injection d'eau du circuit secondaire à travers le circuit primaire jusque dans le fond de la cuve.
Les figures 5A et 5B illustrent, de manière schématique, une centrale nucléaire de type REP intégrant un système de sécurité selon un premier mode de réalisation de l'invention. La figure 5B illustre de manière agrandie les liaisons hydrauliques entre la cuve et le générateur de vapeur.
Les figures 6A à 6C sont des vues de détails d'un exemple non limitatif correspondant au premier mode de réalisation représenté de manière plus globale sur les figures 5A et 5B permettant l'injection, au sein d'un générateur de vapeur, de l'eau secondaire à l'intérieur du circuit primaire.

La figure 7 est un schéma illustrant le fonctionnement de l'invention sur une vue en perspective d'une solution mettant en oeuvre le mode de réalisation illustré en figures 5A et 5B.

La figure 8 illustre, de manière très schématique, une portion de cuve et les paramètres permettant de positionner des fusibles le long d'une génératrice de la cuve.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions relatives des différents éléments constitutifs de la centrale, en particulier les dimensions relatives des éléments constituant le réacteur et ses conduites, de la couche métallique liquide, et des différents organes de la centrale ne sont pas représentatives de la réalité.

## DESCRIPTION DÉTAILLÉE

Avant d'entamer une revue détaillée de modes de réalisation de l'invention, plusieurs caractéristiques et techniques sont mentionnées ci-dessous, étant rappelé que la portée de la protection est définie par les revendications.

Selon un exemple, ladite détection de la formation d'une couche métallique liquide à la surface du bain de corium est effectuée à l'aide d'au moins un fusible disposé sur une paroi de la cuve, l'au moins un fusible étant configuré pour fondre lorsqu'il est atteint par la couche métallique liquide.

Selon un exemple, l'au moins un fusible présente une température de fusion du fusible supérieure ou égal à un seuil de température Tf, avec $Tf \geq 400°C$, de préférence $Tf \geq 500°C$ et de préférence $Tf=600°C$.

Selon un exemple, le réacteur comprend plusieurs fusibles répartis selon au moins une génératrice d'une paroi de la cuve de sorte que deux fusibles voisins définissent une tranche de cuve, les volumes $V_{tranche}$ des tranches étant identiques.

Selon un exemple, la mise en communication fluidique du circuit secondaire avec le circuit primaire est déclenchée en fonction de la détection, par exemple à l'aide d'au moins un fusible, d'une température de paroi interne de la cuve supérieure à un seuil de température Tf, avec Tf supérieure à 400°C et de préférence Tf supérieure à 500°C.

Selon un exemple non compris dans la portée des revendications, on détermine un profil d'évolution de la hauteur de la couche métallique liquide dans la cuve à partir de fusibles disposés sur une paroi interne de la cuve et disposés de préférence selon au moins deux génératrices de cette paroi. On détermine, en fonction de ce profil, l'instant auquel il convient de déclencher la mise en communication fluidique du circuit secondaire avec le circuit primaire.

Selon un exemple, on dispose sur une face interne de la paroi de la cuve une série de fusibles. De préférence les fusibles sont placés sur une génératrice du fond de la cuve et d'une paroi latérale de la cuve. La progression de montée du niveau de corium, ainsi que le début de dégradation de la cuve par la couche de métal liquide superficielle est détectée par la désactivation successive des fusibles de cette génératrice. A partir d'une certaine hauteur de corium, l'activation de la communication fluidique est activée.

Selon un exemple, le réacteur comprend au moins un fusible sur une paroi de la cuve. Le fusible est configuré pour, lorsque la couche métallique liquide atteint le fusible elle fasse fondre ce dernier. La température de fusion du fusible est par exemple supérieure ou égal à un seuil de température Tf, avec $Tf \geq 350°C$, de préférence $Tf \geq 450°C$ et de préférence $Tf=600°C$.

Selon un exemple, le réacteur, comprend plusieurs fusibles répartis selon au moins une génératrice d'une paroi de la cuve. Les fusibles sont disposés le long d'une génératrice de sorte que si le volume de la couche métallique liquide augmente avec une vitesse constante, les intervalles de temps séparant les moments auxquels deux fusibles successifs d'une génératrice sont atteints par la couche métallique liquide restent constants.

Selon un exemple le fluide secondaire s'écoule à l'intérieur de la cuve sur la couche métallique liquide au moins pendant toute une durée au cours de laquelle la couche métallique liquide présente une épaisseur $e_{72}$ suffisamment faible pour percer au moins partiellement une paroi interne de la cuve.

Selon un exemple, le fluide secondaire s'écoule à l'intérieur de la cuve sur la couche métallique liquide pendant au moins trente minutes et de préférence pendant au moins une heure et de préférence pendant au moins deux heures.

Selon un exemple, le débit d'eau secondaire s'écoule dans le circuit primaire en passant au travers d'un passage dont la section minimale $S_{brèche}$ est comprise entre 0,2 cm² (0,2.10⁻⁴ m²) et 20 cm² et de préférence entre 0,8 cm² et 7 cm². Selon un exemple non compris dans la portée des revendications, si la section minimale $S_{brèche}$ de ce passage est circulaire, alors son diamètre est compris entre 5 et 50 mm et de préférence entre 10 et 30 mm. Typiquement, ce diamètre est d'environ 20mm.

Selon un exemple, le fluide secondaire s'écoule à l'intérieur de la cuve (10) avec un débit inférieur à 10 kg/s (10³ grammes/secondes) et de préférence inférieur à 7 kg/s.

Selon un exemple, le réacteur comprend une enveloppe interne, située à l'intérieur de la cuve, enveloppant le coeur et définissant avec une paroi interne de la cuve un volume annulaire dit downcomer, le downcomer étant configuré de sorte à ce que, lors du fonctionnement normal du réacteur :

- l'entrée débouche à l'extérieur de l'enveloppe et dans le downcomer afin que le fluide primaire en provenance de l'entrée soit guidé jusque dans le fond de la cuve,
- la sortie débouche à l'intérieur de l'enveloppe afin que le fluide primaire présent dans le coeur puisse sortir du réacteur par la sortie.

Le réacteur est configuré de sorte à ce que, lorsque le dispositif explosif crée l'au moins un passage supprimant l'isolation fluidique entre le circuit secondaire et le circuit primaire, le fluide secondaire contenu dans le générateur de vapeur s'écoule dans un fond de la cuve en passant au préalable par ladite entrée de la cuve puis par le downcomer.

Ce mode de réalisation favorise un ruissellement de l'eau secondaire sur les parois internes de la cuve. Cela permet de refroidir la couche métallique liquide bien plus efficacement que si le fluide secondaire pénétrait dans la cuve depuis la sortie de cette dernière, ou côté branche chaude, donc sans passer par le downcomer. En effet, en ruisselant côté downcomer, l'évaporation de l'eau secondaire, et donc le refroidissement de la couche de métal liquide, se produit dans la zone où le percement de cuve se situe. Pour atteindre ce mode de réalisation, la connexion côté secondaire doit être effectuée côté branche froide du générateur de vapeur, c'est-à-dire du côté de l'échangeur où la température primaire correspond au retour froid du circuit primaire (boîte à eau froide).

Selon un exemple, le réacteur comprend au moins un fusible disposé sur une paroi de la cuve, le fusible étant configuré pour, lorsque la couche métallique liquide atteint le fusible elle fasse fondre ce dernier, la température de fusion du fusible étant supérieure ou égal à un seuil de température Tf, avec Tf $\geq$ 400°C, de préférence Tf $\geq$ 500°C et de préférence Tf=600°C.

Selon un exemple, le réacteur comprenant plusieurs fusibles répartis selon au moins une génératrice d'une paroi de la cuve, les fusibles sont répartis le long d'une génératrice de sorte que deux fusibles voisins selon cette génératrice, définissent une tranche de cuve, les volumes Vtranche des tranches sont identiques.

Selon un exemple, le générateur de vapeur comprend une enveloppe enfermant du fluide secondaire et du fluide primaire, l'enveloppe enfermant une isolation isolant fluidiquement les fluides secondaire et primaire, le système de sécurité étant configuré pour supprimer l'isolation entre les fluides secondaire et primaire à l'intérieur de l'enveloppe du générateur de vapeur, créant ainsi ledit passage. La suppression de cet isolement correspondant à une brèche de diamètre limité et contrôlé (typiquement 20mm de diamètre)

Selon un exemple le générateur de vapeur comprend des tubes à l'intérieur desquels circule le fluide primaire, le fluide secondaire étant au contact d'une paroi externe des tubes, le système de sécurité comprenant un dispositif explosif comportant au moins un bouchon explosif logé à l'intérieur d'au moins l'un desdits tubes et un dispositif de déclenchement, le bouchon explosif étant configuré pour, lorsqu'il est déclenché par le dispositif de déclenchement, exploser de sorte à sectionner au moins le tube dans lequel il est logé, créant ainsi ledit passage. Avant l'explosion, le bouchon forme, au moins en partie et avantageusement à lui seul, ladite isolation fluidique entre les circuits secondaire et primaire.

Selon autre un exemple le générateur de vapeur comprend :

- une première partie dans lequel circule le fluide primaire,
- une deuxième partie dans lequel circule le fluide secondaire,
- une plaque à tubes isolant fluidiquement les première et deuxième parties, la plaque à tubes comprenant au moins un tube s'étendant en partie au moins dans la deuxième partie et à l'intérieur duquel circule le fluide primaire, le fluide secondaire présent dans la deuxième partie étant au contact d'une paroi externe du tube,
  le système de sécurité comprenant :
- au moins un canal de communication entre les première et deuxième parties,
- au moins un dispositif explosif comportant au moins :

  ○ un bouchon explosif logé à l'intérieur dudit canal et empêchant la circulation du fluide dans ledit canal ;
  ○ un dispositif de déclenchement.

Le bouchon explosif est configuré pour, lorsqu'il est déclenché par le dispositif de déclenchement, exploser de sorte à se détruire au moins partiellement pour permettre une circulation par ledit canal formant alors un passage entre les première et deuxième parties. Avant l'explosion, le bouchon forme, au moins en partie et avantageusement à lui seul, ladite isolation fluidique entre les circuits secondaire et primaire.

Selon un exemple, le dispositif de déclenchement est configuré pour être activé depuis l'extérieur du générateur de vapeur.

Selon un exemple le dispositif de déclenchement comprend au moins un fil traversant une paroi de l'enveloppe du générateur de vapeur.

Selon un exemple, le dispositif de déclenchement comprend :

- un contacteur magnétique situé à l'intérieur de l'enveloppe du générateur de vapeur et relié par un fil au bouchon explosif, et
- un excitateur magnétique, situé à l'extérieur de l'enveloppe du générateur de vapeur, configuré pour coopérer avec le contacteur magnétique de sorte que lorsque l'excitateur magnétique est activé, il actionne le contacteur magnétique ce qui déclenche l'explosion du bouchon explosif.

Selon un exemple non compris dans la portée des revendications, le dispositif de sécurité est configuré pour que le fluide secondaire contenu dans le générateur de vapeur s'écoule dans la cuve avec un débit compris entre 4 et 5 kg/s pour une pression du générateur de vapeur de l'ordre de 68 bar.

Ainsi, même avec une quantité limitée de fluide de refroidissement, on parvient à enrayer le phénomène de focusing effect et à éviter le percement de la cuve.

Les termes « sensiblement », « environ », « de l'ordre de » signifient en tenant compte des tolérances de fabrication et/ou de mesure et peuvent notamment correspondre « à 10% près ».

Dans la suite de la description, on qualifie de fonctionnement normal du réacteur 1 ou de la centrale, une phase de fonctionnement en l'absence d'accidents ou d'accidents graves. Un accident de type accident de perte de réfrigérant primaire grosse brèche ou très grosse brèche, ne constitue pas une phase de fonctionnement normal du réacteur 1.

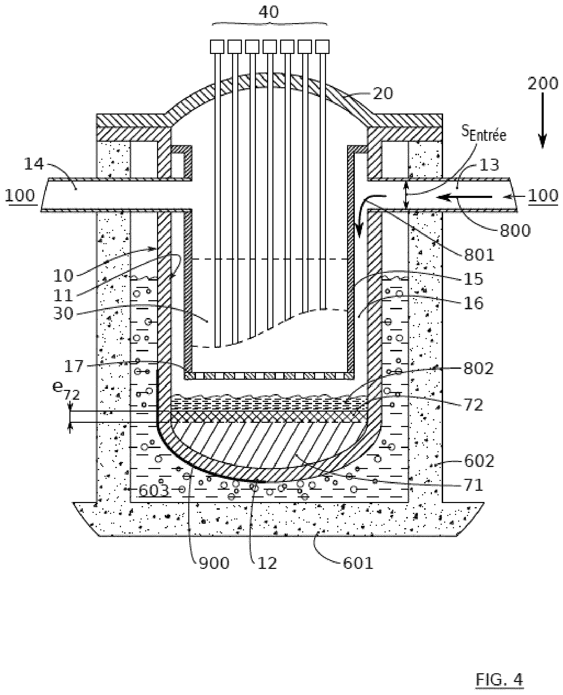

L'invention va maintenant être décrite en détail en référence aux figures 4 à 8.

La figure 4 illustre un réacteur 1, par exemple du type de celui décrit en référence aux figures 2 à 3A.

Toutes les caractéristiques décrites en référence aux figures 2 à 3A sont applicables aux modes de réalisation illustrés en figure 4. Sur cette figure 4, le coeur 30 est fondu ou partiellement fondu. Un bain 71 de corium 70 se forme dans le fond 12 de la cuve 10. À la surface du bain 71, la couche 72 de métal liquide se forme ou s'apprête à se former.

Avant que cette couche 72 de métal liquide commence à percer la cuve 10 ou rapidement après le début de ce percement partiel, on prévoit de déverser dans le fond 12 de la cuve 10, et donc sur cette couche 72, un fluide de refroidissement.

Ce fluide de refroidissement parvient depuis les entrées 13 et/ou les sorties 14 du circuit primaire 100.

Comme cela est sera expliqué par la suite en détail, ce fluide de refroidissement est constitué par de l'eau du circuit secondaire 200 qui s'écoule dans le circuit primaire 100.

On notera qu'en situation d'accident grave, de manière classique, on déclenche une dépressurisation du circuit primaire 100. Cela peut être effectué en ouvrant une vanne spécifique située par exemple en haut du pressuriseur 110. Cette dépressurisation du circuit primaire peut être déclenchée dès lors qu'une température seuil est atteinte, par exemple une température de gaine d'assemblage qui atteindrait 650°C ou plus. Cette dépressurisation du circuit primaire 100 fait que ce dernier présente une pression inférieure à celle du circuit secondaire 200. Typiquement, la pression dans le circuit primaire 100 dépressurisé est inférieure à 20 bars. Sous l'effet du différentiel de pression entre les circuits primaire 100 et secondaire 200, la mise en communication de ces circuits 100, 200 provoque une injection rapide du fluide du circuit secondaire 200 dans le circuit primaire 100.

Selon un mode de réalisation particulièrement avantageux, le fluide 800 du circuit secondaire 200 se déverse dans le circuit primaire 100 et parvient à l'intérieur de la cuve 10 par l'entrée 13. De préférence, le réacteur 1 comprend une enveloppe interne 15, située à l'intérieur de la cuve 10, enveloppant le coeur 30 et définissant avec la paroi interne 11 de la cuve 10 un volume annulaire habituellement qualifié par son vocable anglais downcomer 16 (portion de descente). Cette enveloppe interne 15 est configurée de sorte à ce que, lors du fonctionnement normal du réacteur 1 (c'est-à-dire en l'absence d'accident grave par exemple) :

- l'entrée 13 débouche à l'extérieur de l'enveloppe 15 et dans le downcomer 16 afin que le fluide froid en provenance de l'entrée 13 soit guidé jusque dans le fond 12 de la cuve 10.

- la sortie 14 débouche à l'intérieur de l'enveloppe 15 afin que le fluide chaud présent dans le coeur 30 puisse sortir du réacteur 1 par la sortie 14.

Ainsi, en fonctionnement normal du réacteur 1, le fluide froid du circuit primaire 100 pénètre dans le réacteur 1 par l'entrée 13 ; descend par gravité dans le downcomer 16 pour atteindre le fond 12 de la cuve, remonte à l'intérieur de l'enveloppe 15 en passant par une plaque ajourée habituellement désignée plaque support 17; traverse le coeur 30 pour extraire la chaleur issue de la fission et ressort du réacteur 1 par la sortie 14.

Dans le cadre de la mise en oeuvre de la présente invention, le fluide de refroidissement issu du circuit secondaire 200 et qui pénètre 801 dans la cuve 10 via le circuit 100 descend donc également dans le long de la paroi 11 de la cuve 10 et atteint la couche de métal 72 liquide. Ce fluide de refroidissement de secours emprunte donc le cheminement naturel de l'eau dans le réacteur 1. Ce fluide de refroidissement entre au contact de la surface de la couche 72 de métal liquide. Plus précisément, le fluide de refroidissement parvient sur la couche 72 de métal liquide à l'emplacement le plus critique, i.e., à l'interface entre cette dernière et la paroi 11 de la cuve 10. Le fluide de refroidissement assure donc une fonction de refroidissement sur toute la périphérie où la couche 72 de métal liquide est susceptible de percer la paroi 11 interne de la cuve 10 par focusing effect. Un apport de fluide de refroidissement depuis le downcomer 16 apporte donc une solution particulièrement efficace pour réduire le risque de percement de la cuve par focusing effect.

De manière également avantageuse, ce mode de mise en contact de l'eau liquide avec la couche 72 de métal en surfusion, s'effectue par ruissellement depuis la paroi interne de la cuve 10, ce qui est beaucoup plus doux qu'une injection d'eau massive sur le bain de corium. Une injection massive d'eau sur le bain de corium pouvant entraîner un choc vapeur préjudiciable pour l'intégrité de la cuve du réacteur.

En figure 4, le fluide de refroidissement est représenté sous forme d'une nappe 802 étalée sur la surface libre de la couche métallique 72. Naturellement, lorsque cette dernière n'est pas encore suffisamment refroidie, le fluide de refroidissement se vaporise au contact de la couche métallique 72.

On notera qu'il est largement préférable de maintenir ouverte les vannes de dépressurisation du circuit primaire 100, afin d'évacuer la vapeur produite lors du contact du fluide de refroidissement issu du circuit secondaire 200 avec la couche 72 de métal liquide. Par ailleurs, la dépressurisation du circuit primaire 100 facilite l'injection du fluide de refroidissement du secondaire à l'intérieur de la cuve 10.

Ainsi, ce fluide de refroidissement permet de refroidir la couche 72 de métal liquide lorsque cette dernière présente une épaisseur $e_{72}$ suffisamment fine pour concentrer la puissance thermique du bain 72 sur une surface si réduite qu'elle parvienne à percer la paroi interne 11 de la cuve 10.

Le déversement de ce fluide de refroidissement se poursuit jusqu'à ce que l'épaisseur $e_{72}$ de la couche 72 de métal liquide soit suffisamment importante pour que la puissance thermique de cette couche 72 soit transmise sur une surface plus importante et donc que la puissance par unité de surface soit suffisamment faible pour empêcher le percement de la paroi interne 11 de la cuve 10.

Comme illustré en figure 4, on prévoit également un refroidissement de la paroi externe de la cuve 10. Pour cela, on peut noyer le puits 603 de cuve 10 i.e., on injecte ou on déverse de l'eau entre la cuve 10 et le puits 603. Ce refroidissement est habituellement suffisant en cas d'accident de type IVR (rétention à l'intérieur de la cuve) mais ne l'est naturellement pas si le phénomène de focusing effect apparait.

En effet, un refroidissement par l'extérieur de la cuve en noyant le puits 603 de cuve 10, permet par exemple d'extraire 1 Megawatts par mètre carré $(1MW/m^2)$. Dans une situation de focusing effect ce refroidissement n'est plus suffisant, puisqu'il faudrait pouvoir extraire 1,5 $MW/m^2$, voire $2MW/m^2$, dans la zone dans laquelle le focusing effect opère un percement de la cuve 10.

Selon un exemple non limitatif, pour noyer le puits 603 de cuve 10, on peut utiliser l'eau contenue dans un réservoir, par exemple dans la piscine de chargement du combustible. Ce réservoir peut être situé dans le bâtiment du réacteur ou en dehors de ce dernier. De préférence, on prévoit qu'une partie au moins de ce réservoir soit disposé suffisamment en hauteur par rapport à la cuve 603 pour permettre un écoulement dans cette dernière par gravité. Le plus souvent, on prévoit qu'une partie au moins de ce réservoir se situe au-dessus du chapeau ou couvercle 20 du réacteur 1.

Selon un mode de réalisation, le débit du fluide de refroidissement issu du circuit secondaire 200 n'est pas contrôlé. Par contre, la modélisation de ce débit est facilement calculable dès lors que la pression du circuit secondaire 200, et accessoirement du circuit primaire 100, est connue. C'est principalement l'inventaire initial en eau des générateurs de vapeur 210, et la section $S_{brèche}$ de la ou des passages entre le circuit secondaire 200 et le circuit primaire 100 qui fixe la durée de refroidissement. Les calculs montrent qu'une partie assez limitée de l'inventaire total des générateurs de vapeur 210 suffit pour refroidir suffisamment la couche 72 métallique en surfusion, et éviter le percement de la cuve 10, le temps que la couche 72 métallique en surface s'épaississe suffisamment.

Typiquement, le dispositif de sécurité est configuré de sorte que la section $S_{brèche}$ de passage de la ou des passages entre le circuit secondaire 200 et le circuit primaire 100 permet à l'eau secondaire d'entrer dans la cuve 10 avec un débit inférieur à 10 kg/s et de préférence inférieur à 7 kg/s. Typiquement, ce débit est compris entre 4 et 5 kg/s pour une pression initiale (c'est-à-dire avant ouverture du ou des passages vers le circuit primaire 100) dans le générateur de vapeur (GV) de l'ordre de 68 bar.

Cela permet d'avoir un refroidissement suffisant de la couche de métal liquide sur une durée suffisamment longue pour éviter le percement de la cuve.

Selon un exemple non limitatif, afin de contrôler ce temps de refroidissement, on peut prévoir de calibrer soigneusement la section $S_{brèche}$.

Selon un exemple, $S_{brèche}$ est inférieure à $20cm^2$ ($10^{-2}$ mètres). De préférence $S_{brèche}$ est supérieure à 2 $cm^2$ Selon un exemple, $S_{brèche}$ est compris entre 2 $cm^2$ et $20cm^2$. Avantageusement il est compris entre 2 $cm^2$ et $7cm^2$.

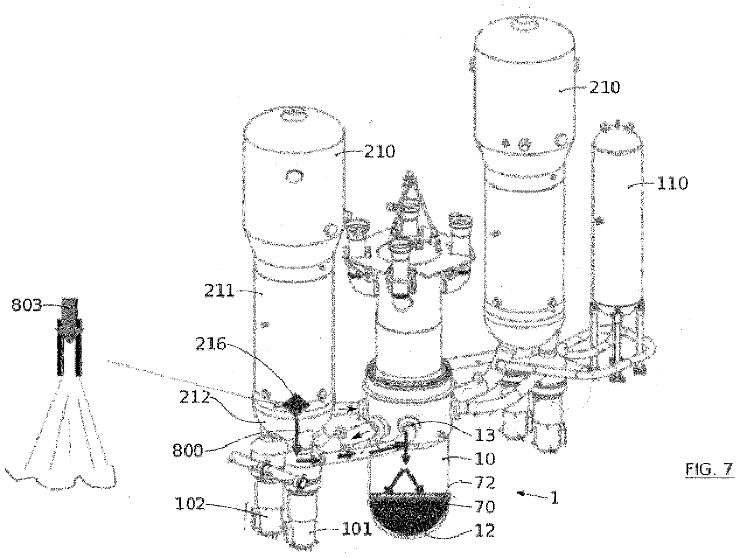

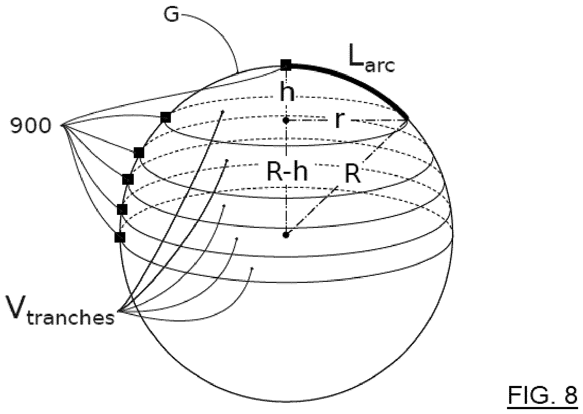

$S_{entrée}$ est la section minimale de passage entre le circuit primaire 100 et l'entrée 13 de la cuve 10. Typiquement, il s'agit donc de la section minimale de passage du fluide primaire en fonctionnement normal du réacteur. Par exemple, $S_{entrée}$ correspond à la section de l'entrée 13 dans la cuve. Cette section est illustrée en figure 8. S'il y a plusieurs entrées du circuit primaire 100 dans la cuve 10, par exemple comme illustré sur la figure 7, alors $S_{entrée}$, est la somme de toutes les entrées dans la cuve 10.

$S_{brèche}$ est la section du passage, ou la somme des sections des passages lorsqu'il y a plusieurs passages, mettant en communication fluidique le fluide secondaire présent dans l'au moins un générateur de vapeur 210 avec le circuit primaire 100.

La section d'entrée côté branche froide de la cuve réacteur est très largement supérieure à la section de la brèche provoquée entre le circuit secondaire et le circuit primaire. Typiquement, selon un exemple non limitatif $S_{brèche}$ < 0.05 * $S_{entrée}$ et de préférence $S_{brèche}$ < 0.01 * $S_{entrée}$ et de préférence $S_{brèche}$ < 0.005 * $S_{entrée}$.

Typiquement, la section de passage du fluide primaire côté branche froide est de l'ordre de 6000 $cm^2$.

Typiquement, la pression de l'eau contenue dans un générateur de vapeur 210 est de l'ordre de 60 à 70 bars. Le circuit primaire 100 est quant à lui dépressurisé. En effet, des dispositifs d'ouverture de vannes au niveau du pressuriseur 110 sont actionnés pour dépressuriser le circuit primaire 100, en cas d'accident grave déclaré. Cela permet d'éviter des éjections sous pression de produits de fission du coeur en cas de percement de la cuve. Par ailleurs, cette dépressurisation du circuit primaire permet de faciliter l'injection du secondaire à l'intérieur de la cuve 30.

Dans la plupart des scenarii conduisant à l'accident grave, les circuits secondaires sont fermés et isolés, d'une part par la fermeture des lignes d'injection Vapeur conduisant à la turbine, et d'autre part par les Vannes de Décharge à l'Atmosphère.

Selon un exemple, le déclenchement du dispositif de sécurité est effectué par un opérateur. Afin de déterminer l'instant auquel il faut déclencher le déversement du fluide du circuit secondaire 200 dans le circuit primaire 100, il est avantageux de pouvoir estimer la hauteur du bain de corium et de préférence le profil de l'évolution de cette hauteur.

À cet effet, on peut prévoir un ou des fusibles 900 disposés sur la paroi de la cuve 10. Ils sont configurés de sorte à fondre lorsqu'une température seuil Tf est appliquée à ces fusibles 900. Typiquement, cette température Tf est atteinte lorsque du corium se forme dans la cuve 10 et entre au contact des fusibles 900. Lorsque la température au

sein de la cuve correspond à fonctionnement normal du réacteur, les fusibles 900 ne fondent pas. Selon un exemple, Tf > 400°C, de préférence Tf ≥ 500°C, de préférence Tf ≥ 600°C,

Lorsqu'un fusible 900 fond, il empêche le passage d'un signal électrique. La résistance du circuit intégré en ce fusible est donc infinie.

Le fusible comprend une âme formée en un matériau électriquement conducteur et une gaine qui est quant à elle électriquement isolante. Ainsi, on évite un court-circuit entre la cuve métallique et l'âme conductrice.

L'âme est par exemple faite d'un métal tel que l'aluminium dont la température de fusion est voisine de 600°C, ou de l'antimoine. La gaine isolante est par exemple faite d'une céramique.

Le fusible forme par exemple un câble présentant deux extrémités reliées au dispositif de sécurité et un coude situé entre ces deux extrémités. Le coude correspond au point le plus bas du fusible. Ainsi, lorsque le fusible passe d'une configuration passante, dans laquelle le courant passe dans l'âme d'une extrémité à l'autre (résistance R1) à une configuration non-passante dans laquelle le courant ne passe plus dans l'âme d'une extrémité à l'autre (résistance R2 > R1, de préférence R2 infinie), cela signifie que le bain de corium a fait fondre le coude. On en déduit ainsi que la hauteur de la surface libre du bain de corium correspond à la hauteur du coude du fusible 900 par rapport au fond la cuve 10.

L'utilisation de fusible s'avère beaucoup plus robuste et fiable que l'utilisation de capteurs de température.

De préférence, le fusible est positionné sur la paroi interne 11 de la cuve 10. Cela permet de renforcer la fiabilité de la détection de l'apparition du Focusing effect. En effet, en plaçant le fusible sur la paroi externe de la cuve 10, la mesure de température sera essentiellement pilotée par la température d'ébullition de l'eau au contact de la paroi de cuve, ce qui ne permet pas de détecter efficacement la montée du bain de corium, ainsi que la formation de la couche de Focusing Effect.

De préférence, le dispositif de sécurité comprend une série de fusibles 900 positionnés le long d'au moins une génératrice de la paroi 11 interne de la cuve 10. De préférence, les fusibles sont positionnés le long d'au moins deux génératrices. Ainsi, si une coulée de corium intervient le long d'une génératrice, des fusibles placés en partie supérieure pourraient être atteints et ne pas caractériser la montée progressive du bain de corium en fond de cuve.

De préférence, pour chaque génératrice, une série de fusibles 900 est disposée sur une génératrice de la partie hémisphérique formant le fond 12 de de la cuve 10 cette dernière et une autre partie des fusibles est disposée sur une paroi latérale de la cuve 10.

Ces fusibles permettent de déterminer le moment auquel le bain de corium 71 commence à se former ainsi que le moment auquel il faut déclencher l'injection de l'eau du secondaire dans le circuit primaire 100.

Par exemple, en fonction du profil d'évolution de la hauteur du bain de corium, hauteur du bain de corium estimée en fonction des signaux envoyés par les fusibles, on peut, par simulation, décider quel est le moment le plus opportun pour déclencher l'injection de l'eau du secondaire dans le circuit primaire 100.

Le profil d'évolution de cette température permet également de détecter la montée du niveau de corium dans la cuve 10. Ce profil permet également de détecter le début du percement de cette dernière par la couche 72 de métal liquide.

On peut par exemple prévoir que des fusibles 900 d'une même génératrice, ou que les fusibles 900 de deux génératrices différentes, présentent des températures de fusion différents. Pour cela, on pourra prévoir des matériaux différents pour la gaine et/ou l'âme des fusibles. Il est préférable de prévoir un dispositif entièrement démontable et remplaçable, lors d'une visite décennale par exemple, afin de pouvoir disposer d'un ensemble essentiel pour la sûreté dont la durée de vie ne dépasse pas 10 ans d'exploitation réacteur.

Selon un exemple particulièrement avantageux, on souhaite positionner des détecteurs de hauteur de bain de corium de sorte à ce que la vitesse de montée du bain de corium s'exprime sur les fusibles. Cela permet de contrôler avec plus de précision à quel instant le focusing effect peut se produire et à quel instant il convient de déverser le fluide des générateurs de vapeur 210 à l'intérieur du circuit primaire 100. Ainsi, ce positionnement des fusibles 900 est effectué de sorte à ce que les volumes $V_{tranche}$ des tranches de coeur situées entre deux fusibles 900 consécutifs ou voisins sont constants.

Plus précisément, deux fusibles voisins selon une répartition verticale, définissent une tranche de cuve. Cette tranche de cuve est délimitée d'une part par la paroi 11 interne de la cuve 10 et d'autre part par deux plans verticaux, chaque plan vertical passant par l'un de ces fusibles 900 voisins. Au moins certains, de préférence tous les volumes des tranches de cuve sont identiques. De préférence, les fusibles voisins selon une répartition verticale sont disposés selon une même courbe formant de préférence une génératrice de la cuve 10.

La figure 8 fait apparaître de manière très schématique une portion de la cuve 10, ainsi que des fusibles 900 disposés selon une génératrice G. Les fusibles 900 définissent des tranches de volume $V_{tranche}$ sensiblement égaux.

Ainsi, si la vitesse de formation du bain de corium (donc la vitesse de formation du volume de corium) est constante, les fusibles d'une même génératrice soient atteints par le bain de corium avec des intervalles de temps identiques entre deux fusibles successifs de cette génératrice.

En référence à la figure 8, un exemple de calcul de la position des fusibles va maintenant être décrit.

Dans cet exemple, on place les détecteurs fusibles le long de 2 à 4 génératrices réparties de manière régulière autour de l'axe du fond hémisphérique de la cuve 10. Ainsi, ainsi, pour un nombre de génératrice respectivement égal à 2, 3, et 4, ces génératrices seront séparées respectivement d'un angle de 180°, 120° et 90°.

On considère que le fond de la cuve 10 est formé par une portion de sphère, la sphère présentant un diamètre de 4 mètres.

On souhaite positionner des détecteurs de hauteur de bain de corium correspondant à 3, 6, 9, 12, et 15 $m^3$ de corium déversé. Cela permet de déterminer le profil de montée du bain de corium. En ayant une idée précise de la variation de la vitesse de montée du bain de corium, l'opérateur (ou le dispositif automatique de sécurité) pourra déterminer quel est l'instant le plus pertinent pour déclencher l'injection de l'eau des générateurs de vapeur 210 dans le circuit primaire 100.

Le remplissage total du fond hémisphérique est de 16,75 $m^3$.

Sur la figure 8, les paramètres suivants sont référencés :

- R= rayon de la partie hémisphérique de la cuve,
- h= hauteur du fusible par rapport au fond de la cuve,
- $L_{arc}$= longueur, le long de la paroi de la cuve, entre le fond de la cuve et la position du fusible,
- r=distance entre l'axe du cylindre de la partie cylindrique de la cuve 10 (soit l'axe, passant par le centre de la sphère et qui est perpendiculaire au plan P).

Le plan P correspond à la jonction entre la partie hémisphérique de la cuve et les parois latérales de la cuve s'étendant selon un cylindre.

Le volume $V_{calotte}$ de la partie hémisphérique de la cube peut est calculé selon l'équation suivante :

$$V_{calotte} = \frac{\pi h^2 (3R - h)}{3}$$

La position d'un fusible peut être déterminée selon la valeur $L_{arc}$ calculée selon l'équation suivante :

$$L_{arc} = \arccos\left(\frac{R - h}{R}\right) * R$$

Si l'on souhaite disposer cinq fusibles par génératrice, les fusibles peuvent être disposés de la manière suivante afin d'avoir une correspondance entre la vitesse de montée du bain de corium et la fusion de ces fusibles :

- fusible N°1 : hauteur h=0.738 m; $L_{arc}$=1.776 m;
- fusible N°2 : hauteur h=1.079 m; $L_{arc}$=2.185 m;
- fusible N°3 : hauteur h=1.362 m; $L_{arc}$=2.492 m;
- fusible N°4 : hauteur h=1.617 m; $L_{arc}$=2.756 m;
- fusible N°5 : hauteur h=1.860 m; $L_{arc}$=3.002 m;

De manière alternative, on peut commander la mise en communication du circuit secondaire 200 avec le circuit primaire 100 avec un pilotage au temps à partir de l'instant où la formation du bain 71 de corium est détectée grâce aux fusibles 900.

Par simulation, on sait déterminer à l'avance que l'on dispose d'une durée D1 entre le début de la formation du bain de corium 71 et le début de la formation de la couche 72 de métal liquide à l'origine du percement de la cuve 10. Cette durée varie naturellement selon les réacteurs. Pour certains réacteurs cette durée D1 est d'environ une heure. L'opérateur activera le dispositif de sécurité à l'instant t1, avec t1= t0+(D1-k1), k1 étant un facteur de sécurité pour s'assurer que l'on déverse l'eau secondaire sur la couche 72 de métal liquide suffisamment tôt pour éviter une fragilisation trop importante de la cuve 10, et de préférence pour éviter le début du percement de la cuve. k1 est par exemple compris entre -5 minutes et 15 minutes.

Par simulation, on sait également déterminer la durée D2 entre le début de la formation du bain 71 de corium et l'instant t2 auquel la couche 72 de métal liquide présente une épaisseur $e_{72}$ suffisamment importante pour ne plus pouvoir percer la cuve 10.

On dimensionne alors la section de passage de la ou des passages entre le circuit secondaire 200 et le circuit primaire 100 de manière à pouvoir déverser, entre les instants t1 et t2, un débit Qmin suffisant au refroidissement de la couche 72 de métal liquide.

Comme indiqué ci-dessus, il est largement avantageux que le fluide 800 issu du circuit secondaire et qui se déverse sur la couche 72 de métal en surfusion descend par ruissellement le long de la paroi 11 de la cuve 10. Néanmoins, de manière alternative ou combinée à ce mode de réalisation, on peut prévoir que ce fluide 800 parvienne à l'intérieur de la cuve 10 en pénétrant dans cette dernière par l'orifice de sortie 14.

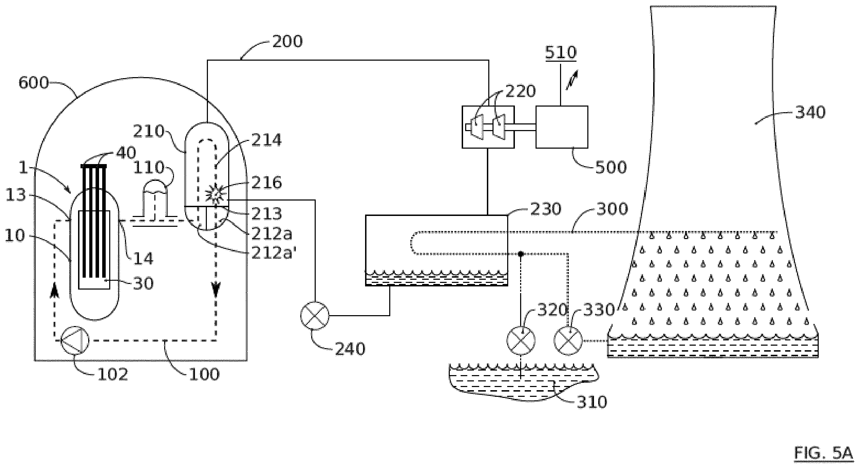

Les figures 5A à 7 illustrent différents modes de réalisation permettant d'injecter le fluide du circuit secondaire 200 dans la cuve 10, via le circuit primaire 100.

Les solutions de tous ces modes de réalisation consistent à mettre en communication le circuit secondaire 200 avec le circuit primaire 100. Cette mise en communication s'effectue grâce à un système de sécurité configuré pour rompre de manière volontaire une barrière de confinement qui isole ces deux circuits 100, 200. On rappellera qu'en fonctionnement normal c'est-à-dire en l'absence d'accidents et lors d'une phase de production d'électricité de la centrale, les circuits primaire 100 et secondaire 200 sont fluidiquement isolés l'un de l'autre.

Un premier mode de réalisation est illustré par les figures 5A à 7.

Dans ce mode de réalisation la liaison hydraulique entre le circuit secondaire 200 et le circuit primaire 100 est constituée par une liaison hydraulique interne aux générateurs de vapeur 210.

Un générateur de vapeur 210 forme une enceinte qui à la fois renferme du fluide du circuit secondaire 200 et à la fois renferme au moins un conduit 214 dans lequel circule le fluide du circuit primaire 100. Ainsi le fluide du circuit secondaire 200 vient au contact d'une paroi externe du conduit 214.

Selon une première solution, le système de sécurité comprend un dispositif qui permet de créer au moins une brèche entre l'intérieur dudit conduit 214 et le fluide du circuit secondaire 200 présent dans l'enceinte du générateur de vapeur 210.

Ainsi, la brèche forme ledit passage permettant l'injection de l'eau secondaire dans le circuit primaire 100.

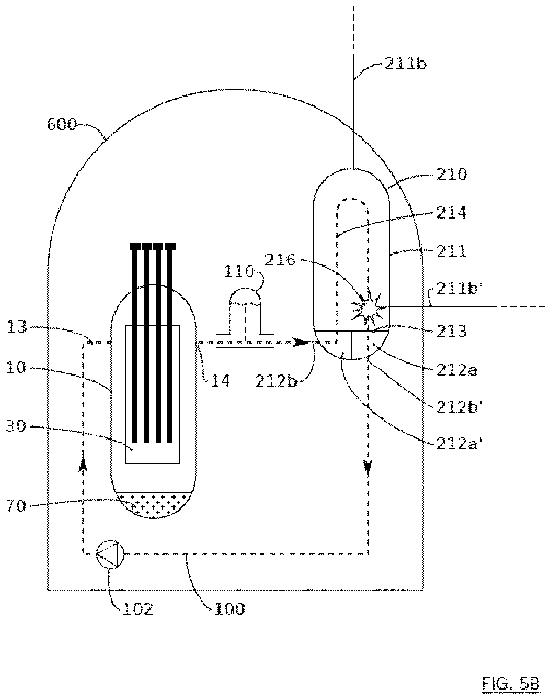

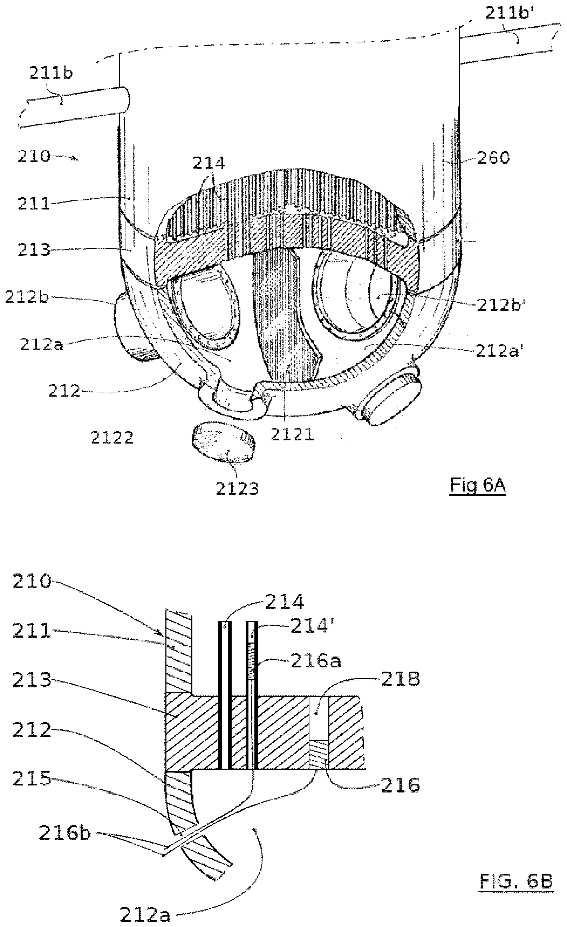

Cette solution est illustrée de manière schématique sur la figure 5B. Elle sera décrite en détail, sous forme de plusieurs variantes, en référence aux figures 6A à 7.

La figure 6A illustre une partie inférieure des générateurs de vapeur 210. Ce générateur de vapeur 210 comprend une enveloppe 260 de forme généralement cylindrique. Cette enveloppe 260 définit une partie supérieure 211, présentant des ouvertures 211b, 211 b' en communication avec le circuit secondaire 200 et une partie inférieure 212 présentant des ouvertures 212b, 212b' en communication avec le circuit primaire 100. Les parties supérieure 211 et inférieure 212 sont séparées par une plaque 213 à tubes. Une face inférieure de la plaque 213 à tubes délimite avec la partie inférieure 212 un volume constituant une boîte à eau. La boîte à eau présente de préférence une forme hémisphérique. Elle est séparée en deux parties 212a, 212a' par une cloison 2121.

La partie 212a présente une ouverture 212b connectée hydrauliquement avec l'entrée 13 de la cuve 10. La partie 212a' présente une ouverture 212b' connectée hydrauliquement avec la sortie 14 de la cuve 10. Ainsi, les parties 212a et 212b, ainsi que les tubes 214 font partie du circuit primaire 100.

L'eau sous pression à haute température venant du coeur 30 du réacteur 1 nucléaire en sortie 14 de cuve 10 pénètre dans la partie 212a' de la boîte à eau puis circule dans les tubes 214 du faisceau de tubes du générateur de vapeur 210. La plaque 213 à tubes porte en effet une pluralité de tubes 214 dont une extrémité débouche dans la partie 212a' et dont une autre extrémité débouche dans la partie 212a. Typiquement, ces tubes 214 forment des « U » renversés. Ces tubes en « U » baignent dans l'eau du circuit secondaire 200 présente dans la partie supérieure 211 du générateur de vapeur 210.

Ainsi, l'eau chaude sous pression circule, en partant de la partie 212a' d'abord de bas en haut, jusqu'au sommet du coude du « U », puis de haut en bas pour parvenir dans la partie 212a de la boîte à eau. Sur ce trajet, l'eau circulant dans les tubes 214 cède de la chaleur au fluide du circuit secondaire 200 présent dans la partie supérieure 211 du générateur de vapeur 210. Une fois parvenue dans la partie 212a de la boîte à eau, l'eau peut ensuite s'échapper par la sortie 212b et regagner l'entrée 13 de la cuve 10 pour être à nouveau chauffée par le coeur 30.

On notera que chacune des parties 212a, 212a' de la boîte à eau est munie d'une ouverture de visite 2122 fermée par un bouchon 2123. Cette ouverture de visite 2122 présente une dimension suffisante pour qu'un homme ou un robot puisse accéder à l'intérieur de la boîte à eau.

De manière particulièrement avantageuse, le système de sécurité comprend un dispositif, également désigné organe, configuré pour rompre l'isolation entre le circuit primaire 100 et le circuit secondaire 200 à l'intérieur du générateur de vapeur 210.

Typiquement ce dispositif est un dispositif explosif 216 configuré pour générer une explosion capable de créer une brèche rompant de manière volontaire la barrière de confinement hydraulique entre le circuit primaire 100 et le circuit secondaire 200. De préférence, cette brèche est créée dans la portion dite froide d'un conduit 214, c'est-à-dire en aval du coude formé par le « U » inversé. Cela permet de faciliter l'écoulement du fluide secondaire par gravité dans le circuit primaire 100. De plus, cette brèche est de préférence localisée le plus bas possible selon un axe vertical, c'est-à-dire idéalement à proximité immédiate de la plaque à tubes 213, ceci afin de privilégier un écoulement gravitaire de l'ensemble de l'eau secondaire contenu dans le générateur de vapeur 210.

Selon un premier mode de réalisation, ce dispositif, référencé 216 en figure 6B, comprend un bouchon explosif 216a logé à l'intérieur d'un tube 214'. Ce tube 214' est de préférence identique aux tubes 214 de la plaque 213 à tubes, ce qui simplifie fortement la fabrication du générateur de vapeur 210.

Le bouchon explosif 216a est inséré dans le tube 214', au-dessus de la plaque 213 à tubes. Lorsqu'il est activé, le bouchon explosif 216a sectionne au moins le tube 214' dans lequel il est logé. L'intérieur de ce tube 214' est alors en communication fluidique avec l'eau du circuit secondaire 200 présente dans la partie supérieure 211 du générateur de vapeur 210.

Cette eau se déverse alors très rapidement dans la boîte à eau, puis dans le circuit primaire 100, pour atteindre la cuve 10 et le coeur 30 du réacteur 1. Cette eau est rapidement dirigée dans le réacteur 1 sous l'effet de la pression régnant dans le générateur de vapeur 210. En effet, on rappellera que, de préférence, le générateur de vapeur 210 est très rapidement isolé hydrauliquement en cas d'accident, piégeant ainsi les masses d'eau qu'il contient et conservant en son sein la pression qui y règne.

Selon ce mode de réalisation, si un seul tube 214 est sectionné, alors la section $S_{brèche}$ est sensiblement égale à la section du tube 214 sectionné. Si plusieurs tubes 214 sont sectionnés $S_{brèche}$ est sensiblement égale à la somme des sections des tubes 214 sectionnés. La section $S_{brèche}$ est dimensionnée de sorte à ce que l'eau du secondaire s'écoule dans la cuve de manière contrôlée, comme indiqué précédemment.

Sur le schéma de la figure 6B, l'eau présente dans la partie supérieure 211 se déverse dans la partie 212a de la boîte à eau. De préférence, cette dernière est connectée hydrauliquement à l'entrée 13 de la cuve 10, ce qui permet à l'eau d'atteindre la couche 72 métallique en surfusion en descendant par le downcomer 16, induisant les avantages mentionnés ci-dessus.

On veillera à créer dans une paroi du générateur de vapeur 210 un trou 215 de passage étanche des fils 217b de commande du dispositif explosif 216. Ces fils de commande 217b présentent ainsi une extrémité accessible depuis l'extérieur du générateur de vapeur 210 pour déclencher l'explosion. Ces fils 217b sont installés lors de la pose du dispositif explosif 216.

Selon une variante, le système de sécurité comprend, outre le bouchon explosif 216a, un doigt de gant, un connecteur magnétique et un excitateur magnétique pour déclencher l'explosion. Le doigt de gant présente une portion qui s'étend à l'intérieur du générateur de vapeur 210 jusqu'au bouchon explosif 216a. Cette portion comprend un contacteur magnétique et un fil reliant le contacteur magnétique au bouchon explosif 216a. Le doigt de gant présente une portion accessible depuis l'extérieur du générateur de vapeur 210. Cette portion porte ou est accessible par un excitateur magnétique configuré pour activer le contacteur. Lorsque le contacteur est activé il déclenche l'explosion du bouchon explosif 216a.

Dans ce cas, le doigt de gant est de préférence composé d'un matériau amagnétique.

Cette solution a pour avantage d'éviter qu'un fil traverse une paroi du générateur de vapeur 210 ce qui simplifie l'étanchéité du système.

Naturellement, on peut prévoir d'équiper plusieurs tubes 214' d'un dispositif explosif 216 afin d'introduire une redondance et de réduire tout risque de non fonctionnement d'un bouchon explosif 216a. Cela permet également d'augmenter la section $S_{brèche}$ totale de passage du fluide du circuit secondaire 200 à l'intérieur du circuit primaire 100.

On peut également prévoir d'intégrer plusieurs dispositifs explosifs 216 dans un même tube 214' afin d'introduire une redondance et de réduire tout risque de non fonctionnement d'un bouchon explosif 216a. Pour cela, on veillera à ce que les fils de commande 216b des tubes 214' placés verticalement les plus en hauteur restent accessibles lors de la pose des dispositifs placés plus bas.

Le dispositif explosif 216 peut être placé lors de la fabrication du générateur de vapeur 210. Alternativement, cette solution peut également être déployée sur des générateurs de vapeur de centrales en activité. Pour cela, on procède à une opération de bouchage d'un tube 214 ou de plusieurs tubes 214 déjà existants avec un bouchon explosif 216a.

Ce mode de réalisation présente pour avantage de ne pas introduire d'élément additionnel dans le générateur de vapeur 210. En effet, le dispositif explosif est intégré dans l'un des tubes existants dans les générateurs de vapeur 210 classiques.

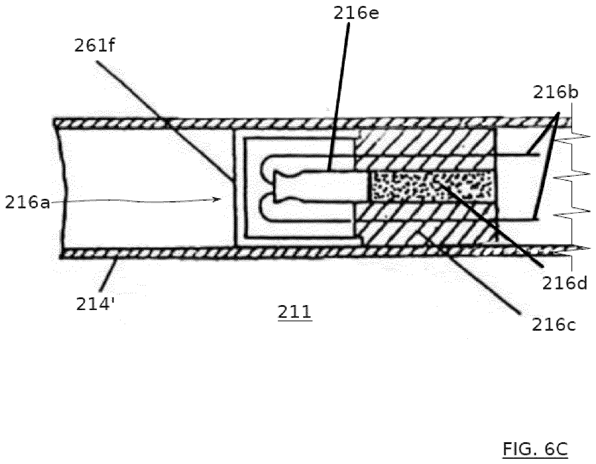

Un exemple de dispositif explosif 216 est illustré en figure 6C. Sur cette figure, on a représenté un tube 214' obturé par un bouchon explosif 216a. Le bouchon explosif 216a comprend un corps 216c à l'intérieur duquel est logée une charge principale 216d et une partie au moins d'un détonateur 216e. Le détonateur 216e est au contact de la charge 216d. De préférence, le corps 216c est formé d'un matériau de transmission de l'explosion ou comprend un tel matériau. Un ou plusieurs fils 216b relient le détonateur 216e à un dispositif de déclenchement accessible depuis l'extérieur du générateur de vapeur 210. De préférence une enveloppe de protection 216f isole le détonateur et la charge.

La figure 6B, en partie droite, illustre un autre mode de réalisation alternatif du dispositif explosif 216.

Dans cet exemple, on prévoit un canal 218 de passage traversant, formé dans la plaque 213 à tubes, et mettant en communication l'eau secondaire enfermée dans la partie supérieure 211 et l'eau primaire enfermée dans la partie inférieure 212 de la boîte à eau, de préférence la partie 212a reliée à l'entrée 13 de la cuve 10. Ce canal 218 de passage est obturé par un dispositif explosif 216. Ce dispositif explosif 216 peut par exemple être identique au bouchon explosif 216a décrit précédemment.

Ce mode de réalisation a pour avantage que la section $S_{brèche}$ soit définie par la section initiale du canal 218. Or cette section de canal 218 est parfaitement maîtrisée. Cela permet de contrôler avec plus de précision la vitesse et la durée de l'écoulement du fluide secondaire à l'intérieur de la cuve 10. Naturellement, il faut pour cela que la charge explosive soit suffisamment importante pour entièrement extraire le bouchon 216 du canal 218.

On notera qu'un même générateur de vapeur 210 peut comprendre des dispositifs explosifs 216 de différents types, comme illustré en figure 6B. Le plus souvent, le même générateur de vapeur 210 comprendra un seul dispositif explosif 216 ou plusieurs dispositifs explosifs 216 du même type.

La figure 7 illustre en perspective la solution du mode de réalisation des figures 5A et 5B. On retrouve sur cette figure le coeur 1 du réacteur, avec la cuve 10 dont le fond 12 contient le bain de corium 70. On a également illustré un surpresseur 110 pour piloter et augmenter la pression du circuit primaire 100. Des conduits relient hydrauliquement la cuve 10 avec des générateurs de vapeur 210, ici au nombre de deux.

La cuve 10 est alimentée, pour chaque générateur de vapeur 210, via deux conduits d'entrée. Sur chacun de ces conduits d'entrée une pompe 101, 102 est disposée entre le générateur de vapeur 210 et la cuve 10 pour mettre en circulation le fluide du circuit primaire 100.

Ces pompes 101, 102 se trouvent sur le passage du fluide 800 issu du circuit secondaire 200 lors du déclenchement du dispositif explosif 216.

Sur cet exemple, les pompes 101, 102 sont de type à rotor noyé. Les rotors de ces pompes se trouvent en effet verticalement plus bas que le circuit de passage du fluide. Ce type de pompe permet d'éviter la présence d'une branche en « U » dans le conduit reliant le générateur de vapeur 210 à l'entrée 13 de la cuve 10. Cela permet de faciliter l'écoulement liquide gravitaire, jusque dans la partie froide de la cuve 10, de l'eau issue du circuit secondaire 200. Comme indiqué précédemment, cet écoulement gravitaire le long du downcomer 16 améliore l'efficacité du refroidissement de la couche 72 de métal liquide à l'origine du percement de la cuve 10 par focusing effect. La solution, illustrée en figure 7, présente donc un avantage significatif.

Cette figure 7 illustre également la pulvérisation sous forme de jet (spray) 803 qui se produit lors de la détente de l'eau secondaire dans le circuit primaire 100 lors de la rupture de la barrière de confinement fluidique.

On notera que l'invention s'applique également dans le cas où le conduit du circuit primaire 100 présente une branche en « U » entre le générateur de vapeur 210 et la cuve 10.

Dans l'hypothèse d'une rupture d'un tube 214 du générateur de vapeur 210, ou du percement d'un trou de la plaque 213 à tubes côté froid 13 du circuit primaire 100, la présence d'une branche en « U » avant la moto pompe primaire 101 est défavorable pour l'injection gravitaire liquide depuis la brèche créée jusqu'au déversement dans le downcomer 16. Toutefois, le spray 803 créé par la brèche lors de la détente transporte une fraction liquide tout le long du circuit de retour jusqu'au downcomer 16. La présence de la branche en « U » empêche toutefois un écoulement liquide gravitaire pur jusqu'à la couche 72 à refroidir. La vapeur créée par l'eau secondaire a toutefois tendance à se propager préférentiellement côté froid jusqu'au downcomer 16, plutôt que de remonter à travers l'ensemble des tubes 214 du générateur de vapeur 210 puis de redescendre et revenir vers la cuve 10 côté chaud 14, ce qui est favorable pour refroidir la couche 72 de métal liquide à l'origine du percement de la cuve 10 par focusing effect. Ce refroidissement n'est pas aussi efficace qu'un écoulement liquide gravitaire pur par ruissellement, puisque c'est alors un mélange de vapeur et de spray qui entre en contact de toute la surface de métal présente dans le downcomer 16. Pour obtenir un écoulement uniquement gravitaire liquide, il est nécessaire d'attendre que la branche en « U » soit totalement remplie en liquide pour que l'excédent d'eau commence alors à se déverser dans la volute de la pompe 101 du circuit primaire 100, puis vers la branche froide avec l'entrée 13 de la cuve 10, et enfin dans le downcomer 16. Une géométrie à pompe primaire à rotor noyé, sans branche en « U » comme illustré en figure 7 et mentionnée ci-dessus, est donc préférée pour obtenir une efficacité d'injection d'eau optimum depuis une rupture de tube 214 du générateur de vapeur 210, puisque l'écoulement gravitaire liquide pur y est favorisé.

Au vu de la description qui précède, il apparaît clairement que l'invention propose une solution fiable et robuste pour améliorer considérablement la sûreté d'un réacteur nucléaire de type REP, en particulier en cas de perte de réfrigérant du circuit primaire.

Avantageusement et comme décrit ci-dessus, le lieu de communication entre circuit primaire et le circuit secondaire est choisi de telle sorte que la propagation de l'eau secondaire vers le circuit primaire se produit de façon quasi exclusive côté branche froide du circuit primaire. Ainsi, l'eau des générateurs de vapeur va emprunter les branches froides primaires avant de s'écouler gravitairement dans le downcomer, là où le percement de cuve par le focusing effect s'opère.

L'invention n'est pas limitée aux modes de réalisations précédemment décrits et s'étend à tous les modes de réalisation couverts par les revendications.

Naturellement, l'invention n'est pas limitée à un réacteur présentant la structure illustrée en figure 4 et de nombreuses variantes peuvent être apportées à ce réacteur sans sortir de la portée définie par les revendications.

En particulier, seule une entrée 13 et une sortie 14 sont représentées sur les figures. De préférence, le réacteur 1 comprend plusieurs entrées et plusieurs sorties. Il comprend également de préférence plusieurs générateurs de vapeur 210.

**Revendications**

1. Procédé de sécurité pour réacteur (1) nucléaire à eau pressurisée en cas de fusion au moins partielle d'un coeur (30) du réacteur (1) avec formation d'un bain (71) de corium (70), le réacteur (1) comprenant au moins, lors d'une phase de fonctionnement :

    • un circuit primaire (100) dans lequel est destiné à circuler un fluide primaire à base d'eau, le circuit primaire (100) étant configuré pour que le fluide primaire pénètre dans une cuve (10) du réacteur (1) et traverse le coeur (30) contenu dans la cuve (10) afin d'extraire de la chaleur produite par le coeur (30),
    • un circuit secondaire, dans lequel est destiné à circuler un fluide secondaire à base d'eau, le circuit secondaire (200) étant fluidiquement isolé du circuit primaire (100), et comprenant au moins un générateur de vapeur (210), le circuit secondaire (200) étant configuré pour absorber de la chaleur du circuit primaire (100) et la transformer en partie au moins en vapeur dans le générateur de vapeur (210),

    **caractérisé en ce que** le procédé comprend au moins l'étape suivante en réponse à une détection d'un évènement caractéristique d'une fusion au moins partielle du coeur (30) du réacteur (1) avec formation d'un bain (71) de corium (70) dans un fond (12) de la cuve (10) et avec formation d'une couche (72) métallique liquide à la surface du bain (71) de corium (70) :

    • rupture par explosion de l'isolation fluidique pour mettre en communication fluidique le circuit secondaire (200) avec le circuit primaire (100) de sorte que le fluide secondaire emprunte le circuit primaire (100) pour s'écouler à l'intérieur de la cuve (10) sur ladite couche (72) métallique liquide du bain (71) de corium (70).

2. Procédé selon la revendication précédente dans lequel ladite détection est effectuée à l'aide d'au moins un fusible (900) disposé sur une paroi (11) de la cuve (10), l'au moins un fusible (900) étant configuré pour fondre lorsqu'il est atteint par la couche (72) métallique liquide.

3. Procédé selon l'une quelconque des revendications précédentes, dans lequel le fluide secondaire s'écoule à l'intérieur de la cuve (10) sur la couche (72) métallique liquide pendant au moins trente minutes et de préférence pendant au moins une heure et de préférence pendant au moins deux heures.

4. Procédé selon l'une quelconque des revendications précédentes, dans lequel le fluide secondaire s'écoule à l'intérieur de la cuve (10) avec un débit inférieur à 10 kg/s ($10^3$ grammes/secondes) et de préférence inférieur à 7 kg/s.

5. Réacteur (1) nucléaire à eau pressurisée, le réacteur (1) comprenant au moins :

    • une cuve (10) logeant un coeur (30) du réacteur (1), la cuve (10) comprenant au moins une entrée (13) et au moins une sortie (14),
    • un circuit primaire 100) dont au moins une première extrémité est connectée à l'entrée (13) de la cuve (10) et dont au moins une extrémité est connectée à la sortie (14) de la cuve (10) de sorte à ce qu'un fluide primaire circulant dans le circuit primaire (100) pénètre dans la cuve (10) du réacteur (1) par ladite entrée (13) et en ressort par ladite sortie (14) en passant à travers le coeur (30) afin d'extraire de la chaleur produite par le coeur (30), $S_{entrée}$ étant la section de l'au moins une entrée (13) du circuit primaire (100) jusque dans la cuve (10),
    • un circuit secondaire (200), fluidiquement isolé du circuit primaire (100), dans lequel est destiné à circuler un fluide secondaire à base d'eau, et comprenant au moins un générateur de vapeur (210), le circuit secondaire (200) étant configuré pour absorber de la chaleur du circuit primaire (100) et la transformer en partie au moins en vapeur dans le générateur de vapeur (210),

    **caractérisé en ce que** le réacteur (1) comprend un système de sécurité comprenant :

    • un dispositif de sécurité comprenant au moins un dispositif explosif (216) configuré pour exploser afin de rompre l'isolation fluidique entre le circuit secondaire (200) et le circuit primaire (100) de sorte à créer au moins un, et de préférence un unique passage permettant un écoulement à l'intérieur du circuit primaire (100) du fluide secondaire présent dans l'au moins un générateur de vapeur (210).

6. Réacteur selon la revendication précédente, dans lequel le passage présente une section $S_{brèche}$ est comprise entre 0.2 cm² et 20 cm², de préférence 0.8cm² et 20 cm² et encore plus préférentiellement entre 2 cm² et 7 cm².

7. Réacteur selon l'une quelconque des deux revendications précédentes, comprenant au moins un fusible (900) disposé sur une paroi (11) de la cuve (10), le fusible étant configuré pour, lorsqu'une couche (72) métallique liquide à la surface d'un bain (71) de corium (70) formé dans un fond (12) de la cuve (10) atteint le fusible, cette couche (72) métallique liquide fait fondre le fusible, la température de fusion du fusible (900) étant supérieure ou égal à un seuil de température Tf, avec Tf $\geq$ 400°C, de préférence Tf $\geq$ 500°C et de préférence Tf=600°C.

8. Réacteur selon la revendication précédente, comprenant plusieurs fusibles (900) répartis selon au moins une génératrice (G) d'une paroi de la cuve (10), les fusibles (900) sont répartis le long d'une génératrice (G) de sorte que deux fusibles (900) voisins selon cette génératrice, définissent une tranche de cuve (10), les volumes $V_{tranche}$ des tranches sont identiques.

9. Réacteur selon l'une quelconque des quatre revendications précédentes, dans lequel le réacteur (1) comprend une enveloppe interne (15), située à l'intérieur de la cuve (10), enveloppant le coeur (30) et définissant avec une paroi interne (11) de la cuve (10) un volume annulaire dit downcomer (16), le downcomer (16) étant configuré de sorte à ce que, lors du fonctionnement normal du réacteur (1) :

   • l'entrée (13) débouche à l'extérieur de l'enveloppe (15) et dans le downcomer (16) afin que le fluide primaire en provenance de l'entrée (13) soit guidé jusque dans le fond (12) de la cuve (10),
   • la sortie (14) débouche à l'intérieur de l'enveloppe (15) afin que le fluide primaire présent dans le coeur (30) puisse sortir du réacteur (1) par la sortie (14),

   le réacteur étant configuré de sorte à ce que lorsque le dispositif explosif crée l'au moins un passage supprimant l'isolation fluidique entre le circuit secondaire (200) et le circuit primaire (100), le fluide secondaire contenu dans le générateur de vapeur (200) s'écoule alors dans un fond (12) de la cuve (10) en passant au préalable par ladite entrée (13) de la cuve (10) puis par le downcomer (16).

10. Réacteur selon l'une quelconque des cinq revendications précédentes, dans lequel le générateur de vapeur (210) comprend une enveloppe (260) enfermant du fluide secondaire et du fluide primaire, l'enveloppe (260) enfermant une isolation isolant fluidiquement les fluides secondaire et primaire, le système de sécurité étant configuré pour supprimer l'isolation entre les fluides secondaire et primaire à l'intérieur de l'enveloppe du générateur de vapeur, créant ainsi ledit passage.

11. Réacteur selon l'une quelconque des six revendications précédentes, dans lequel le générateur de vapeur (210) comprend des tubes (214) à l'intérieur desquels circule le fluide primaire, le fluide secondaire étant au contact d'une paroi externe des tubes (214), le dispositif explosif (216) comprenant :

   • au moins un bouchon explosif (216a) logé à l'intérieur d'au moins l'un (214') desdits tubes (214) et
   • un dispositif de déclenchement,

   le bouchon explosif (216a) étant configuré pour, lorsqu'il est déclenché par le dispositif de déclenchement, exploser de sorte à sectionner au moins le tube (214') dans lequel il est logé, créant ainsi ledit passage.

12. Réacteur selon l'une quelconque des revendications 5 à 10, dans lequel le générateur de vapeur (210) comprend :

   • une première partie (212) dans lequel circule le fluide primaire,
   • une deuxième partie (211) dans lequel circule le fluide secondaire,
   • une plaque (213) à tubes (214) isolant fluidiquement les première (212) et deuxième (211) parties, la plaque (213) à tubes (214) comprenant au moins un tube (214) s'étendant en partie au moins dans la deuxième partie (211) et à l'intérieur duquel circule le fluide primaire, le fluide secondaire présent dans la deuxième partie (211) étant au contact d'une paroi externe du tube (214),
   • le système de sécurité comprenant :

      ◦ au moins un canal (218) de communication entre les première (212) et deuxième (211) parties,

   • le dispositif explosif (216) comportant au moins :

      ◦ un bouchon explosif (216a) logé à l'intérieur dudit canal (218) et empêchant la circulation du fluide dans ledit canal (218)
      ◦ un dispositif de déclenchement,

   le bouchon explosif (216a) étant configuré pour, lorsqu'il est déclenché par le dispositif de déclenchement, exploser de sorte à se détruire au moins partiellement pour permettre une circulation par ledit canal (218) formant alors un passage entre les première (212) et deuxième (211) parties.

13. Réacteur selon l'une quelconque des deux revendications précédentes, dans lequel le dispositif de déclenchement est configuré pour être activé depuis l'extérieur du générateur de vapeur (210).

14. Réacteur selon la revendication précédente, dans lequel le dispositif de déclenchement comprend au moins un fil (216b) traversant une paroi de l'enveloppe (260) du générateur de vapeur (210).

**15.** Réacteur selon l'une quelconque des revendications 11 à 14, dans lequel le dispositif de déclenchement comprend :

> • un contacteur magnétique situé à l'intérieur de l'enveloppe (260) du générateur de vapeur (210) et relié par un fil (217b) au bouchon explosif (216a), et
> • un excitateur magnétique, situé à l'extérieur de l'enveloppe du générateur de vapeur (210), configuré pour coopérer avec le contacteur magnétique de sorte que lorsque l'excitateur magnétique est activé, il actionne le contacteur magnétique ce qui déclenche l'explosion du bouchon explosif (216a), créant ainsi ledit passage.

## Patentansprüche

**1.** Sicherheitsverfahren für einen Druckwasser-Kernreaktor (1) im Falle einer zumindest teilweisen Kernschmelze eines Kerns (30) des Reaktors (1) mit Bildung einer Schmelze (71) aus Corium (70), wobei der Reaktor (1) gleichzeitig während einer Betriebsphase mindestens Folgendes umfasst:

> • Einen primären Kreislauf (100), in dem ein primäres Fluid auf Wasserbasis zirkulieren soll, wobei der primäre Kreislauf (100) so eingerichtet ist, so dass das primäre Fluid in einen Behälter (10) des Reaktors (1) eintritt und den im Behälter (10) enthaltenen Kern (30) durchquert, um die vom Kern (30) erzeugte Wärme abzuleiten,
> • einen sekundären Kreislauf, in dem ein sekundäres Fluid auf Wasserbasis zirkulieren soll, wobei der sekundäre Kreislauf (200) fluidisch vom primären Kreislauf (100) isoliert ist und mindestens einen Dampferzeuger (210) umfasst, wobei der sekundäre Kreislauf (200) so eingerichtet ist, dass er die Wärme aus dem primären Kreislauf (100) aufnimmt und sie im Dampferzeuger (210) zumindest teilweise in Dampf umwandelt,

> **dadurch gekennzeichnet, dass** das Verfahren als Reaktion auf die Detektion eines Ereignisses, das für eine Kernschmelze zumindest teilweise im Kern (30) des Reaktors (1) mit der Bildung einer Schmelze (71) aus Corium (70) in einem Boden (12) des Behälters (10) und mit Bildung einer flüssige Metallschicht (72) auf der Oberfläche der Schmelze (71) aus Corium (70) kennzeichnend ist, mindestens den folgenden Schritt umfasst:

> • Explosionsbruch der Flüssigkeitsisolierung, um den sekundären Kreislauf (200) mit dem primären Kreislauf (100) zu verbinden, so dass das sekundäre Fluid in den primären Kreislauf (100) strömt, um im Inneren des Behälters (10) auf der flüssigen Metallschicht (72) der Schmelze (71) aus Corium (70) zu fließen.

**2.** Verfahren nach dem vorhergehenden Anspruch, wobei die Detektion unter Verwendung mindestens einer Schmelzsicherung (900) erfolgt, die an einer Wand (11) des Behälters (10) angeordnet ist, wobei die mindestens eine Schmelzsicherung (900) so eingerichtet ist, dass sie schmilzt, wenn sie von der flüssigen Metallschicht (72) erreicht wird.

**3.** Verfahren nach einem der vorhergehenden Ansprüche, wobei das sekundäre Fluid im Inneren des Behälters (10) auf der flüssigen Metallschicht (72) für mindestens dreißig Minuten und vorzugsweise für mindestens eine Stunde und vorzugsweise für mindestens zwei Stunden fließt.

**4.** Verfahren nach einem der vorhergehenden Ansprüche, wobei das sekundäre Fluid im Inneren des Behälters (10) mit einer Rate von weniger als 10 kg/s ($10^3$ Gramm/Sekunde) und vorzugsweise weniger als 7 kg/s fließt.

**5.** Druckwasser-Kernreaktor (1), wobei der Reaktor (1) mindestens Folgendes umfasst:

> • Einen Behälter (10), in dem ein Kern (30) des Reaktors (1) untergebracht ist, wobei der Behälter (10) mindestens einen Eingang (13) und mindestens einen Ausgang (14) enthält,
> • einen primären Kreislauf (100), von dem mindestens ein erstes Ende mit dem Einlass (13) des Behälters (10) verbunden ist und von dem mindestens ein Ende mit dem Auslass (14) des Behälters (10) verbunden ist, so dass ein primäres Fluid, das im primären Kreislauf (100) zirkuliert, durch den Einlass (13) in den Behälter (10) des Reaktors (1) eintritt und durch den Auslass (14) austritt, indem es durch den Kern (30) verläuft, um die vom Kern (30) erzeugte Wärme abzuleiten, wobei $S_{Einlass}$ der Abschnitt des mindestens einen Einlasses (13) des primären Kreislaufes (100) bis in den Behälter (10) ist,
> • einen sekundären Kreislauf (200), der fluidisch vom primären Kreislauf (100) isoliert ist, wobei ein sekundäres Fluid auf Wasserbasis zirkulieren soll und der mindestens einen Dampferzeuger (210) umfasst, wobei der sekundäre Kreislauf (200) so eingerichtet ist, dass er die Wärme aus dem primären Kreislauf (100) aufnimmt und sie im Dampferzeuger (210) zumindest teilweise in Dampf umwandelt,

> **dadurch gekennzeichnet, dass** der Reaktor (1) ein Sicherheitssystem umfasst, das Folgendes umfasst:

• Eine Sicherheitsvorrichtung, die mindestens eine Sprengvorrichtung (216) umfasst, die so eingerichtet ist, dass sie explodiert, um die Fluidisolierung zwischen dem sekundären Kreislauf (200) und dem primären Kreislauf (100) zu durchbrechen und so mindestens einen und vorzugsweise einen einzigen Durchgang herzustellen, der einen Fluss innerhalb des primären Kreislaufes (100) des in dem mindestens einen Dampferzeuger (210) vorhandenen sekundären Fluids ermöglicht.

6. Reaktor nach dem vorhergehenden Anspruch, wobei der Durchgang einen Abschnitt $S_{Spalt}$ zwischen 0,2 cm$^2$ und 20 cm$^2$, vorzugsweise 0,8 cm$^2$ und 20 cm$^2$ und noch bevorzugter zwischen 2 cm$^2$ und 7 cm$^2$ aufweist.

7. Reaktor nach einem der beiden vorhergehenden Ansprüche,
umfassend mindestens eine Schmelzsicherung (900), die an einer Wand (11) des Behälters (10) angeordnet ist, wobei die Schmelzsicherung so eingerichtet ist, dass, wenn sich eine flüssige Metallschicht (72) der Oberfläche einer Schmelze (71) aus Corium (70), die in einem Boden (12) des Behälters (10) gebildet ist, die Schmelzsicherung erreicht, diese flüssige Metallschicht (72) die Schmelzsicherung schmilzt, wobei die Schmelztemperatur der Schmelzsicherung (900) größer oder gleich einem Temperaturschwellenwert Tf ist, wobei Tf ≥ 400 °C, vorzugsweise Tf ≥ 500 °C und vorzugsweise Tf = 600 °C.

8. Reaktor nach dem vorhergehenden Anspruch, umfassend mehrere Schmelzsicherungen (900), die entlang mindestens einer Mantellinie (G) einer Wand des Behälters (10) verteilt sind, wobei die Schmelzsicherungen (900) entlang mindestens einer Mantellinie (G) verteilt sind, so dass zwei Schmelzsicherungen (900), die auf dieser Mantellinie nebeneinander liegen, ein Stück des Behälters (10) definieren, wobei die Volumina $V_{Stück}$ der Stücke identisch sind.

9. Reaktor nach einem der vier vorhergehenden Ansprüche, wobei der Reaktor (1) eine Innenhülle (15) umfasst, die sich im Inneren des Behälters (10) befindet, den Kern (30) umhüllt und mit einer Innenwand (11) des Behälters (10) ein ringförmiges Volumen, Fallrohr (16) genannt, definiert, wobei das Fallrohr (16) so eingerichtet ist, dass während des normalen Betriebs des Reaktors (1):

• Der Eingang (13) an der Außenseite der Hülle (15) und in das Fallrohr (16) mündet, so dass das vom Einlass (13) kommende primäre Fluid zum Boden (12) des Behälters (10) geleitet wird,

• der Auslass (14) an die Innenseite der Hülle (15) mündet, so dass das im Kern (30) vorhanden primäre Fluid den Reaktor (1) durch den Auslass (14) verlassen kann,

wobei der Reaktor so eingerichtet ist, dass, wenn die Sprengvorrichtung den mindestens einen Durchgang herstellt, der die Fluidisolierung zwischen dem sekundären Kreislauf (200) und dem primären Kreislauf (100) aufhebt, das im Dampferzeuger (200) enthaltene sekundäre Fluid dann in einen Boden (12) des Behälters (10) fließt, indem es zuvor den Einlass (13) des Behälters (10) und dann das Fallrohr (16) durchströmt.

10. Reaktor nach einem der fünf vorhergehenden Ansprüche, wobei der Dampferzeuger (210) eine Hülle (260) umfasst, das das sekundäre Fluid und das primäre Fluid umschließt, wobei die Hülle (260) eine Isolierung umschließt, die das sekundäre und das primäre Fluid fluidisch isoliert, wobei das Sicherheitssystem so eingerichtet ist, dass die Isolierung zwischen den sekundären und dem primären Fluid im Inneren der Hülle aufgehoben wird, wodurch der Durchgang hergestellt wird.

11. Reaktor nach einem der sechs vorhergehenden Ansprüche, wobei der Dampferzeuger (210) Rohre (214) umfasst, in denen das primäre Fluid zirkuliert, wobei das sekundäre Fluid in Kontakt mit einer Außenwand der Rohre (214) steht, wobei die Sprengvorrichtung (216) Folgendes umfasst:

• Mindestens einen Sprengverschluss (216a), der in mindestens einem (214') der Rohre (214) untergebracht ist und
• eine Auslösevorrichtung,

wobei der Sprengverschluss (216a) so eingerichtet ist, dass er bei Auslösung durch die Auslösevorrichtung explodiert, um zumindest das Rohr (214'), in dem er untergebracht ist, zu durchtrennen, wodurch der Durchgang hergestellt wird.

12. Reaktor nach einem der Ansprüche 5 bis 10, wobei der Dampferzeuger (210) Folgendes umfasst:

• Einen ersten Teil (212), in dem das primäre Fluid zirkuliert,
• einen zweiten Teil (211), in dem das sekundäre Fluid zirkuliert,
• eine Platte (213) mit Rohren (214), die den ersten (212) und den zweiten (211) Teil fluidisch isoliert, wobei die Platte (213) mit Rohren (214) mindestens ein Rohr (214) umfasst, das sich zumindest teilweise in den zweiten Teil (211) und in des Innere, in dem das primäre Fluid zirkuliert, erstreckt, wobei sich das im zweiten Teil (211) vorhandene sekundäre Fluid in Kontakt mit einer Außenwand des Rohrs (214) befindet,
• das Sicherheitssystem, das Folgendes umfasst:

   o mindestens einen Verbindungskanal (218) zwischen dem ersten (212) und dem zweiten (211) Teil,

• die Sprengvorrichtung (216), die mindestens Folgendes aufweist:

   ◦ Einen Sprengverschluss (216a), der im Inneren des Kanals (218) untergebracht ist und die Zirkulation des Fluids im Kanal (218) verhindert,
   ◦ eine Auslösevorrichtung,

wobei der Sprengverschluss (216a) so eingerichtet ist, dass er bei Auslösung durch die Auslösevorrichtung explodiert, um sich selbst zumindest teilweise zu zerstören und eine Zirkulation durch den Kanal (218) zu ermöglichen, der einen Durchgang zwischen dem ersten (212) und dem zweiten (211) Teil bildet.

13. Reaktor nach einem der beiden vorhergehenden Ansprüche, wobei die Auslösevorrichtung so eingerichtet ist, dass sie von außerhalb des Dampferzeugers (210) aktiviert werden kann.

14. Reaktor nach dem vorhergehenden Anspruch, wobei die Auslösevorrichtung mindestens einen Draht (216b) umfasst, der durch eine Wand der Hülle (260) des Dampferzeugers (210) verläuft.

15. Reaktor nach einem der Ansprüche 11 bis 14, wobei die Auslösevorrichtung Folgendes umfasst:

   • Einen Magnetschütz, der sich innerhalb der Hülle (260) des Dampferzeugers (210) befindet und über einen Draht (217b) mit dem Sprengverschluss (216a) verbunden ist, und
   • ein magnetischen Erreger, der sich außerhalb der Hülle des Dampferzeugers (210) befindet und so eingerichtet ist, dass er mit dem Magnetschütz so zusammenwirkt, dass, wenn der magnetische Erreger aktiviert ist, er den Magnetschützt betätigt, der die Explosion des Sprengverschlusses (216a) auslöst, wodurch der Durchgang hergestellt wird.

**Claims**

1. A safety method for a pressurized water nuclear reactor (1) in the event of at least partial meltdown of a core (30) of the reactor (1) with formation of a pool (71) of corium (70), the reactor (1) comprising at least, during an operating phase:

   • a primary circuit (100) in which a water-based primary fluid is intended to circulate, the primary circuit (100) being configured so that the primary fluid enters a vessel (10) of the reactor (1) and pass through the core (30) contained in the vessel (10) in order to extract heat produced by the core (30),
   • a secondary circuit, in which a water-based secondary fluid is intended to circulate, the secondary circuit (200) being fluidly isolated from the primary circuit (100), and comprising at least one steam generator (210), the secondary circuit (200) being configured to absorb heat from the primary circuit (100) and at least partially transform it into steam in the steam generator (210),

**characterised in that** the method comprises at least the following step in response to a detection of an event characteristic of an at least partial meltdown of the core (30) of the reactor (1) with formation of a pool (71) of corium (70) in a bottom (12) of the vessel (10) and with a formation of a liquid metal layer (72) on the surface of the pool (71) of corium (70):

   • rupture by explosion of the fluid isolation to place the secondary circuit (200) in fluid communication with the primary circuit (100) so that the secondary fluid takes the primary circuit (100) to flow in the vessel (10) on said liquid metal layer (72) of the pool (71) of corium (70).

2. The method according to the preceding claim, wherein said detection is performed using at least one fuse (900) disposed on a wall (11) of the vessel (10), the at least one fuse (900) being configured to melt when it is reached by the liquid metal layer (72).

3. The method according to any one of the preceding claims, wherein the secondary fluid flows inside the vessel (10) on the liquid metal layer (72) for at least thirty minutes and preferably for at least one hour and preferably for at least two hours.

4. The method according to any one of the preceding claims, wherein the secondary fluid flows inside the vessel (10) with a flow rate of less than 10kg/s ($10^3$ grams/second) and preferably less than 7kg/s.

5. A pressurized water nuclear reactor (1), the reactor (1) comprising at least:

   • one vessel (10) housing a core (30) of the reactor (1), the vessel (10) comprising at least one inlet (13) and at least one outlet (14),

• one primary circuit (100), at least one first end of which is connected to the inlet (13) of the vessel (10) and at least one end of which is connected to the outlet (14) of the vessel (10) so that a primary fluid circulating in the primary circuit (100) enters the vessel (10) of the reactor (1) through said inlet (13) and exits it through said outlet (14) passing through the core (30) in order to extract heat produced by the core (30), $S_{inlet}$ being the section of the at least one inlet (13) of the primary circuit (100) into the vessel (10),

• one secondary circuit (200), fluidly isolated from the primary circuit (100), in which a water-based secondary fluid is intended to circulate, and comprising at least one steam generator (210), the secondary circuit (200) being configured to absorb heat from the primary circuit (100) and at least partially transform it into steam in the steam generator (210),

**characterised in that** the reactor (1) comprises a safety system comprising:

• a safety device comprising at least one explosive device (216) configured to explode in order to break the fluid isolation between the secondary circuit (200) and the primary circuit (100) so as to create at least one, and preferably a single passage allowing a flow into the primary circuit (100) of the secondary fluid present in the at least one steam generator (210).

6. A reactor according to the preceding claim, wherein the passage has a section $S_{breach}$ is comprised between 0.2cm$^2$ and 20cm$^2$, preferably 0.8cm$^2$ and 20cm$^2$ and even more preferentially between 2cm$^2$ and 7cm$^2$.

7. The reactor according to any one of the two preceding claims, comprising at least one fuse (900) disposed on a wall (11) of the vessel (10), the fuse being configured to, when a liquid metal layer (72) at the surface of a pool (71) of corium (70) formed in a bottom (12) of the vessel (10) reaches the fuse, this liquid metal layer (72) to melt the fuse, the melting temperature of the fuse (900) being greater than or equal to a temperature threshold Tf, with Tf ≥ 400°C, preferably Tf ≥ 500°C and preferably Tf=600°C.

8. The reactor according to the preceding claim, comprising several fuses (900) distributed along at least one generatrix (G) of a wall of the vessel (10), the fuses (900) are distributed along a generatrix (G) such that two neighbouring fuses (900) along this generatrix define a vessel wafer (10), the volumes $V_{wafer}$ of the wafers being identical.

9. The reactor according to any one of the four preceding claims, wherein the reactor (1) comprises an inner envelope (15), located inside the vessel (10), enveloping the core (30) and defining, with an inner wall (11) of the vessel (10), an annular volume called downcomer (16), the downcomer (16) being configured so that, during the normal operation of the reactor (1):

• the inlet (13) opens outside of the envelope (15) and in the downcomer (16) so that the primary fluid from the inlet (13) to be guided to the bottom (12) of the vessel (10),
• the outlet (14) opens inside the envelope (15) so that the primary fluid which is present in the core (30) can exit the reactor (1) through the outlet (14),

the reactor being configured so that, when the explosive device creates the at least one passage eliminating the fluid isolation between the secondary circuit (200) and the primary circuit (100), the secondary fluid contained in the steam generator (200) then flows into a bottom (12) of the vessel (10) by first passing through said inlet (13) of the vessel (10) then through the downcomer (16).

10. The reactor according to any one of the five preceding claims, wherein the steam generator (210) comprises an envelope (260) enclosing secondary fluid and primary fluid, the envelope (260) enclosing an insulation fluidly isolating the secondary and primary fluid, the safety system being configured to eliminate the isolation between the secondary and primary fluid inside the envelope of the steam generator, thus creating said passage.

11. The reactor according to any one of the six preceding claims, wherein the steam generator (210) comprises tubes (214) inside of which the primary fluid circulates, the secondary fluid being in contact with an outer wall of the tubes (214), the explosive device (216) comprising:

• at least one explosive plug (216a) housed inside at least one (214') of said tubes (214) and
• a triggering device,

the explosive plug (216a) being configured to, when it is triggered by the triggering device, explode so as to section the at least one tube (214') in which it is housed, thus creating said passage.

12. The reactor according to any one of claims 5 to 10, wherein the steam generator (210) comprises:

• a first portion (212) in which the primary fluid circulates,

• a second portion (211) in which the secondary fluid circulates,
• a tube (214) plate (213) fluidly isolating the first (212) and second (211) portions, the tube (214) plate (213) comprising at least one tube (214) at least partly extending in the second portion (211) and inside of which the primary fluid circulates, the secondary fluid present in the second portion (211) being in contact with an outer wall of the tube (214),
• the safety system comprising:

  ○ at least one communication channel (218) between the first (212) and second (211) portions,

• the explosive device (216) comprising at least:

  ○ an explosive plug (216a) housed inside said channel (218) and preventing the circulation of the fluid in said channel (218),
  ○ a triggering device,

the explosive plug (216a) being configured to, when it is triggered by the triggering device, explode so as to at least partly destroy itself to allow a circulation by said channel (218) thus forming a passage between the first (212) and second (211) portions.

13. The reactor according to any one of the two preceding claims, wherein the triggering device is configured to be activated from outside the steam generator (210).

14. The reactor according to the preceding claim, wherein the triggering device comprises at least one wire (216b) passing through a wall of the envelope (260) of the steam generator (210).

15. The reactor according to any one of claims 11 to 14, wherein the triggering device comprises:

  • a magnetic contactor located inside the envelope (260) of the steam generator (210) and connected by a wire (217b) to the explosive plug (216a), and
  • a magnetic exciter, located outside the envelope of the steam generator (210), configured to cooperate with the magnetic contactor so that when the magnetic exciter is activated, it actuates the magnetic contactor which triggers the explosion of the explosive plug (216a), thus creating said passage.

FIG. 1

FIG. 2

FIG. 3A

FIG. 3B

FIG. 3C

FIG. 4

FIG. 5A

FIG. 5B

Fig 6A

FIG. 6B

FIG. 6C

FIG. 7

FIG. 8

## RÉFÉRENCES CITÉES DANS LA DESCRIPTION

**Documents brevets cités dans la description**

- WO 2009053322 A
- FR 2763168
- EP 0907187 A